(19) Europäisches Patentamt
European Patent Office
Office européen des brevets

(11) **EP 4 322 268 A1**

(12) **EUROPEAN PATENT APPLICATION**
published in accordance with Art. 153(4) EPC

(43) Date of publication:
**14.02.2024 Bulletin 2024/07**

(21) Application number: **21936160.7**

(22) Date of filing: **22.11.2021**

(51) International Patent Classification (IPC):
**H01M 8/18** (2006.01)     **C01G 31/00** (2006.01)

(52) Cooperative Patent Classification (CPC):
**C01G 31/00; H01M 8/18;** Y02E 60/50

(86) International application number:
**PCT/KR2021/017147**

(87) International publication number:
**WO 2022/215822 (13.10.2022 Gazette 2022/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.04.2021   KR 20210045338
27.07.2021   KR 20210098226
27.07.2021   KR 20210098228**

(71) Applicant: **Soulbrain Co., Ltd.
Seongnam-si, Gyeonggi-do 13486 (KR)**

(72) Inventors:
• **HA, Jong Wook
Seongnam-si, Gyeonggi-do 13486 (KR)**
• **HWANG, Deok Hyeon
Seongnam-si, Gyeonggi-do 13486 (KR)**

(74) Representative: **Dehns
St. Bride's House
10 Salisbury Square
London EC4Y 8JD (GB)**

(54) **METHOD FOR PREPARING VANADIUM ELECTROLYTE AND BATTERY COMPRISING VANADIUM ELECTROLYTE**

(57) The present invention relates to a method of preparing a vanadium electrolyte solution and a battery including the vanadium electrolyte solution. According to the present invention, the present invention has an effect of providing a method of preparing a vanadium electrolyte solution that allows control of the reduction reaction rate of a vanadium compound, provides an effect of omitting separation and recovery processes by not generating by-products, and provides reproducibility of a single manufacturing process and a battery including the vanadium electrolyte solution.

[FIG. 3]

EP 4 322 268 A1

**Description**

[Technical Field]

The present invention relates to a method of preparing a vanadium electrolyte solution and a battery including the vanadium electrolyte solution. More particularly, the present invention relates to a method of preparing a vanadium electrolyte solution that allows control of the reduction reaction rate of a vanadium compound, provides an effect of omitting or simplifying separation and recovery processes by not generating by-products, and reproducibly provides a single process of chemical reduction and a battery including the vanadium electrolyte solution.

[Background Art]

The energy storage system (hereinafter referred to as "ESS") is a technology that provides efficient power operation by converting the conventional power production/use system into a production/storage/use system, and various types of energy storage systems are being studied.

Representative energy storage systems include physical storage methods including pumping-up power generation, compressed air storage, and flywheels; electromagnetic methods including superconducting energy storage and super capacitors; and chemical methods including flow batteries and lithium-ion batteries.

Thereamong, the vanadium redox flow battery has the advantages of low cost, large capacity, long lifespan, and stability. In particular, the vanadium redox flow battery has been evaluated as commercially advantageous in the field as the vanadium redox flow battery has been verified in power plants, new and renewable energy ESS linkage systems, and smart grid ESS construction.

For example, an electrolyte solution constituting the flow battery includes a vanadium electrolyte solution. A 3.5-valent vanadium electrolyte solution containing tetravalent and trivalent vanadium ions in equal amounts is most commonly used. Accordingly, there is a need to develop a process for preparing a 3.5-valent vanadium electrolyte solution that has the advantages of simple preparation, low cost, high quality, and mass production.

The conventional electrolyte solution preparation process is a multi-stage process that mainly uses a combination of chemical reaction and electrolysis methods.

In the conventional method of preparing a tetravalent vanadium electrolyte solution using a reducing agent, $V_2O_5$ is dissolved in a sulfuric acid solution to obtain pentavalent vanadium ions, and the pentavalent vanadium ions are reduced to tetravalent vanadium ions ($VO^{2+}$) using a reducing agent. Types of reducing agents proposed in the conventional method include oxalic acid and methanol.

The oxalic acid ($C_2H_2O_4$) is a commonly used reducing agent. When 1 L of a tetravalent electrolyte solution containing 1.6 M vanadium and 4.0 M sulfuric acid is prepared, considering heat generation, after vanadium, sulfuric acid, and water are mixed, oxalic acid is added and stirring is performed. When the temperature of a reactor is maintained at 90 °C, reaction takes about 4 hours, and a reaction formula is as follows.

$$V_2O_5 + C_2H_2O_4 + 2H_2SO_4 \rightarrow 2VOSO_4 + 3H_2O + 2CO_2$$

Since methanol has a significantly lower reaction rate than oxalic acid, use thereof is limited.

The reducing agent is only involved in the reaction from pentavalent to tetravalent. In addition, an unreacted reducing agent or some of $CO_2$ gas generated by the oxidation reaction of the reducing agent is dissolved in an electrolyte solution. These unreacted/side reactants cause serious deterioration of the properties of the electrolyte solution.

According to the conventional process of preparing tetravalent vanadium ions using sulfur dioxide ($SO_2$), tetravalent vanadium ions are prepared by the following reaction formula.

$$V_2O_5 + SO_2 + H_2SO_4 \rightarrow 2VOSO_4 + H_2O$$

Since sulfur dioxide exists as a gas at room temperature and pressure, the absorption rate of sulfur dioxide into an electrolyte solution is low. Accordingly, an excess of sulfur dioxide is used, which complicates the preparation process and reduces efficiency. In addition, since sulfur dioxide remaining after preparing the electrolyte solution is toxic, a separate process of detoxifying the residual sulfur dioxide is required, which increases process costs.

After primary preparation of the tetravalent vanadium electrolyte solution according to the above procedure, 1/3 of the prepared solution is placed in a positive electrode tank, another 1/3 is placed in a negative electrode tank, and then electrolysis is performed to obtain pentavalent and trivalent electrolyte solutions. The 1/3 tetravalent electrolyte solution remaining after the primary preparation and the 1/3 trivalent vanadium electrolyte solution generated after the secondary preparation (electrolysis) are combined to obtain a 3.5-valent vanadium electrolyte solution.

Accordingly, the conventional process has the following disadvantages. First, the conventional process is performed in multiple steps; second, the performance of the electrolyte solution in primary preparation deteriorates, and third, 33 % of the electrolyte solution is inevitably lost. In addition, in the case of electrolysis, there is an initial investment cost to build an electrolysis facility, costs for consumables such as electrodes and separators are continuously incurred, and there is no clear advantage in terms of building a mass production facility. In addition, even when a high-quality vanadium electrolyte solution is prepared, the vanadium electrolyte solution is not competitive in terms of cost.

To overcome the shortcomings of these processes, a vanadium preparation process using a catalyst and an organic reducing agent was developed. A 3.3- to 3.7-valent vanadium electrolyte solution is prepared using an organic reducing agent including formic acid and a noble metal catalyst such as Ru, Pd, and Pt without electrolysis. Here, unless otherwise specified, the 3.3- to 3.7-valent vanadium electrolyte solution refers to an electrolyte solution containing tetravalent and trivalent vanadium ions in equal molar ratios.

However, in this method, an organic acid-based reducing agent is used, some noble metal catalyst that reduces battery performance may remain in the electrolyte solution, and most of the catalysts used are rare metals. The above matters need to be improved.

Recently, a preparation technology has been developed to produce a 3.5-valent vanadium electrolyte solution using a single reactor according to a noncatalytic chemical reaction method using a hydrazine compound. Specifically, when reducing a pentavalent vanadium compound using a hydrazine compound near the boiling point of an electrolyte solution under heating conditions without a separate catalyst and step-by-step process, a high-purity vanadium electrolyte solution without by-products can be prepared.

Although the above process may be a more advanced preparation process, it is not easy to control the reduction reaction rate using the hydrazine compound alone.

Therefore, research is needed on technologies that can produce high-quality vanadium electrolyte solutions while improving productivity, reproducibility, and stability.

[Related Art Documents]

[Patent Documents]

KR 1415538 B1
Japanese Patent Application Publication No. 2002-175831

[Disclosure]

[Technical Problem]

Therefore, the present invention has been made in view of the above problems, and it is one object of the present invention to provide a method of preparing a vanadium electrolyte solution that allows control of the reduction reaction rate of a vanadium compound, does not require separation and recovery of by-products, and maximizes reaction efficiency.

It is another object of the present invention to provide a method of preparing a vanadium electrolyte solution that provides reproducibility of a preparation process with a single process of chemical reduction and provides a high-quality electrolyte solution in a high yield.

It is yet another object of the present invention to provide a battery including a vanadium electrolyte solution prepared by the method of preparing a vanadium electrolyte solution.

The above and other objects can be accomplished by the present invention described below.

[Technical Solution]

In accordance with one aspect of the present invention, provided is a method of preparing a vanadium electrolyte solution, the method including:

a first step of adding a pentavalent vanadium compound and water and then sequentially adding a nitrogen-based reducing agent and an acid to reduce the pentavalent vanadium compound to a tetravalent vanadium compound; and a second step of reducing the tetravalent vanadium compound to a 3.3- to 3.7-valent vanadium compound, wherein reaction rates of one or more reduction reactions selected from the reduction reaction of the first step and the reduction reaction of the second step are reduced.

The reaction rate of the reduction reaction may be reduced by using a redox additive having lower reducing power than reducing power of the nitrogen-based reducing agent.

A dehydration reaction may occur between the redox additive and the acid to generate an aqueous solution, and then the redox additive may be reduced to oxidize the nitrogen-based reducing agent to generate nitrogen gas.

The redox additive may include one or more selected from molybdenum metal, molybdenum oxide (MoxOy), molybdenum nitride (MoxNy), molybdenum chloride (MoxCly), molybdenum sulfide (MoxSy), molybdenum phosphide (MoxPy), molybdenum carbonate (MoxCy), molybdenum metal oxide (MoxMyOz), molybdenum metal nitride (MoxMyNz), molybdenum metal chloride (MoxMyClz), molybdenum metal sulfide (MoxMySz), molybdenum metal phosphide (MoxMyPz), and molybdenum metal carbonate (MoxMyCz).

A metal of the redox additive may be an element selected from Al, As, Ba, Ca, Cd, Co, Cr, Cu, Fe, Ga, K, Mg, Mn, Na, Ni, Pb, Si, Sn, Ti, Zn, Au, Ag, Pt, Ru, Pd, Li, Ir, W, Nb, Zr, Ta, Ge, and In or an alloy of a plurality of elements selected from Al, As, Ba, Ca, Cd, Co, Cr, Cu, Fe, Ga, K, Mg, Mn, Na, Ni, Pb, Si, Sn, Ti, Zn, Au, Ag, Pt, Ru, Pd, Li, Ir, W, Nb, Zr, Ta, Ge, and In, and x, y(x/y) or x,y, and z(x/y/z) may independently be an integer of 0 or 1.

Based on 100 parts by weight of the pentavalent vanadium compound, the redox additive may be included in an amount of 0.1 to 1.6 parts by weight.

Based on 100 parts by weight of the vanadium compound, the nitrogen-based reducing agent may be included in an amount of 10 to 35 parts by weight.

A molar concentration (M; mol/L) ratio of the pentavalent vanadium compound to the nitrogen-based reducing agent may be 1:0.1 to 1.6.

The acid may include one or more selected from sulfuric acid, hydrochloric acid, nitric acid, and acetic acid, and a proton ion concentration of the acid may be 1 to 20 mol per 1 mol of the vanadium compound.

The second step may be performed at 70 to 120 °C.

The pentavalent vanadium compound may be a low-quality compound having a purity of 90 % or more and less than 99.9 % or a high-quality compound having a purity of 99.9 % or more.

The method may include performing filtration after the first step or the second step.

In the first step, water may be used in an amount of 5 to 15 mol per 1 mol of the vanadium compound. The vanadium compound obtained in the second step may be cooled to a temperature below room temperature, water may be added in a larger amount than the amount of water previously added, and then a reaction solution may be filtered to reduce a reaction rate of the reduction reaction.

The water added in excess amount may be within a range of 42 to 44 mol based on a composition of 1.6 mol of vanadium and 4.0 mol of sulfuric acid.

In the first step, water may be used in an amount of 5 to 15 mol per 1 mol of the vanadium compound. A reaction may be performed at a temperature above 100 °C to obtain a vanadium compound, water may be added in a larger amount than the amount of water previously added, the reduced vanadium compound may be cooled to -25 to 20 °C, and a reaction solution may be subject to circulation filtration at -25 to 40 °C to reduce a reaction rate of the reduction reaction.

In the first step, water may be used in an amount of 5 to 15 mol per 1 mol of the vanadium compound. A reaction may be performed at a temperature above 100 °C to obtain a vanadium compound, the reduced vanadium compound may be cooled to -25 to 20 °C, water may be added in a larger amount than the amount of water previously added, and a reaction solution may be subject to circulation filtration at -25 to 40 °C to reduce a reaction rate of the reduction reaction.

In accordance with another aspect of the present invention, provided is a method of preparing a vanadium electrolyte solution, the method including:

step (A) of preparing a reaction mixture by adding a pentavalent vanadium compound to a solvent and then adding a nitrogen-based reducing agent thereto;
step (B) of reducing the pentavalent vanadium compound to a tetravalent vanadium compound while performing a dehydration reaction by adding an acid and a redox additive to the reaction mixture;
step (C) in which the dehydration reactant oxidizes the nitrogen-based reducing agent to generate nitrogen gas and a self-reduced product; and
step (D) in which the self-reduced product is oxidized by heating the reactant and the tetravalent vanadium compound is reduced to a 3.3- to 3.7-valent vanadium compound,
wherein an entire amount of the nitrogen-based reducing agent is added in step (A), or the nitrogen-based reducing agent is added in steps (A) and (D) in a split manner.

The redox additive may participate in a reaction in an aqueous solution state through dehydration reaction with an acid, so by-products derived from the redox additive are not generated.

Step (D) may be performed by applying reduction reaction time of a vanadium compound calculated by substituting a reaction temperature of 70 to 120 °C and an input amount of a redox additive into Equation 1 below.

[Equation 1]

$$t_R = A \ln(Ma/Mv) + B,$$

wherein $t_R$ is reaction time (min), A is a rate constant, B is a concentration constant, Ma is an input amount (g) of a redox additive, and Mv is an input amount (g) of a vanadium compound.

In accordance with still another aspect of the present invention, provided is a method of preparing a vanadium electrolyte solution, the method including:

a first step of obtaining a reduced vanadium compound by reacting a vanadium compound, a reducing agent, and an acid at 100 °C or higher in 5 to 15 mol of a pre-solvent per 1 mol of the vanadium compound;
a second step of cooling the reduced vanadium compound to -25 to 20 °C after the reaction is complete; and
a third step of performing circulation filtration of the cooled vanadium electrolyte solution at -25 to 40 °C.

In accordance with still another aspect of the present invention, provided is a vanadium electrolyte solution prepared using the above-described method.

In accordance with yet another aspect of the present invention, provided is a redox flow battery including the above-described vanadium electrolyte solution.

The vanadium electrolyte solution may be included in positive and negative electrodes.

[Advantageous Effects]

According to a method of preparing a vanadium electrolyte solution of the present invention, electrolyte solution preparation time can be reduced, a purification process for separating and recovering reaction by-products can be omitted, and a vanadium electrolyte solution having improved charge/discharge performance can be prepared.

In addition, process simplification can be achieved by using a chemical reduction method alone without electrolysis.

In addition, carbon components and noble metal catalyst components can be prevented from remaining in a vanadium electrolyte solution, and a high-quality electrolyte solution can be prepared reproducibly in large quantities.

In addition, a high-purity vanadium electrolyte solution can be provided by effectively reducing impurities.

That is, by preparing a vanadium electrolyte solution having the advantages of economics, high efficiency, high quality, and high performance according to the present invention, a battery containing the vanadium electrolyte solution can be used in all fields where vanadium redox flow batteries are used, such as renewable energy fields, smart grids, and power plants.

[Description of Drawings]

FIG. 1 is a graph showing temperature changes over time at sulfuric acid flow rates of 240 ml/hr and 480 ml/hr during a reduction reaction in examples.
FIG. 2 is a graph showing the correlation between the input amount of a redox additive and the reduction reaction rate of a vanadium compound in examples. Based on the graph, it can be confirmed that the correlation follows the Arrhenius approximation.
FIG. 3 is a graph showing the reduction reaction rate of a vanadium compound as the oxidation number of vanadium ions depending on the input amounts of a redox additive in examples and comparative examples. The graph shows the influence of the redox additive on the reduction reaction rate and reduction amount.
FIG. 4 is a graph showing the charging capacity per cycle of a redox flow battery using positive and negative electrodes containing a vanadium electrolyte solution depending on the input amounts of a redox additive in examples and comparative examples.
FIG. 5 is a graph showing the discharging capacity per cycle of a redox flow battery using positive and negative electrodes containing a vanadium electrolyte solution depending on the input amounts of a redox additive in examples and comparative examples.
FIG. 6 is a graph showing the energy efficiency of a battery including a vanadium electrolyte solution depending on the input amounts of a redox additive in examples and comparative examples.
FIG. 7 is a graph showing reaction rates depending on the content ratios of a pre-solvent and a post-solvent in the first step of performing a reduction reaction as one embodiment of the present invention.

FIG. 8 is a graph showing charging capacity depending to the content ratios of the pre-solvent and the post-solvent of FIG. 7.

FIG. 9 is a graph showing discharging capacity depending to the content ratios of the pre-solvent and the post-solvent of FIG. 7.

FIG. 10 is a graph showing energy efficiency depending to the content ratios of the pre-solvent and the post-solvent of FIG. 7.

FIG. 11 is an image showing a reaction result when the pre-solvent of FIG. 7 was used in an amount less than 5 times the molar amount of vanadium.

FIG. 12 shows a diagram briefly illustrating an apparatus configuration and process flow for preparing an electrolyte solution in an example.

[Best Mode]

Hereinafter, a method of preparing a vanadium electrolyte solution according to the present invention and a battery including the vanadium electrolyte solution will be described in detail.

The terms and words which are used in the present specification and the appended claims should not be construed as being confined to common meanings or dictionary meanings but should be construed as having meanings and concepts matching the technical spirit of the present invention in order to describe the present invention in the best fashion.

In this description, a polymer including a certain compound means a polymer prepared by polymerizing the compound, and a unit in the polymer is derived from the compound.

Unless otherwise specified, all numbers, values, and/or expressions expressing quantities of ingredients, reaction conditions, polymer compositions, and formulations used herein are to be understood as being qualified by the term "about." This is because these numbers are essentially approximations that reflect, among other things, the various uncertainties of measurement that arise in obtaining these values. In addition, when numerical ranges are disclosed in this disclosure, such ranges are contiguous and include all values from the minimum value to the maximum value of such ranges unless otherwise indicated. Also, when such ranges refer to integers, all integers inclusive from the minimum value to the maximum value are included unless otherwise specified.

In the present disclosure, when a range is specified for a variable, it will be understood that the variable includes all values within a range including the endpoints of the range. For example, a range of "5 to 10" includes values of 5, 6, 7, 8, 9, and 10, any subranges such as 6 to 10, 7 to 10, 6 to 9, and 7 to 9, and any values among integers that fit within the scope of a range such as 5.5 to 8.5 and 6.5 to 9. Also, a range of 10 to 30 % includes values such as 10 %, 11 %, 12 %, and 13 %, all integers up to 30 %, and any values among all reasonable integers within the scope of a range, such as 10.5 %, 15.5 %, 25.5 %.

The present inventors provided the reproducibility of a preparation process including a first step of adding a pentavalent vanadium compound and water and then sequentially adding a nitrogen-based reducing agent and an acid to reduce the pentavalent vanadium compound to a tetravalent vanadium compound; and

a second step of reducing the tetravalent vanadium compound to a 3.3- to 3.7-valent vanadium compound, wherein the reaction rates of one or more reduction reactions selected from the reduction reaction of the first step and the reduction reaction of the second step are reduced. In addition, the present invention confirmed that the performance of a vanadium redox flow battery including the electrolyte solution was improved. Based on these results, the present inventors conducted further studies to complete the present invention.

According to one embodiment of the present invention, in a reduction reaction using a reducing agent (hereinafter referred to as "nitrogen-based reducing agent") used for reduction of a vanadium raw material, when an additive (hereinafter referred to as "redox additive") having lower reducing power than that of the reducing agent is used, since an electrolysis process is not required, an electrolyte solution may be prepared using a single process of chemical reduction. In addition, by controlling the reduction reaction rate of a vanadium compound according to the input amount of the redox additive, reaction time may be reduced, the reproducibility of a preparation process may be improved, and the performance of a vanadium redox flow battery including the electrolyte solution may be improved.

In the present disclosure, unless otherwise specified, the "redox additive" assists with the vanadium ion reducing power of the nitrogen-based reducing agent, does not participate in a reduction amount and provides reproducibility in the preparation process, ensures vanadium raw material selectivity, and improves the performance of a battery by being included in an electrolyte solution.

Unless otherwise specified, the vanadium raw material selectivity means that even when a vanadium compound has the same purity, it is not limited by minute quality differences that may occur depending on a vanadium origin or a refining method.

Unless otherwise specified, the reducing power means a reduction reaction rate. Specifically, since reduction occurs sequentially in order of reducing power, the fact that a substance is reduced first means that the reduction reaction rate of the substance is high. When a substance is reduced first and has a potential value that oxidizes itself when a subsequent substance is reduced, the input amount of the first reduced substance may affect the reduction reaction rate of the later reduced substance.

Specifically, since the reduction reaction rate of the redox additive of the present invention is higher than that of the vanadium compound, the redox additive is reduced first, and then the redox additive may have an electrochemical/mechanical potential range in which the redox additive is self-oxidized while reducing the vanadium compound. Accordingly, an electrolysis process may be omitted, and a chemical process may be performed alone. In addition, since the input amount of the redox additive directly affects the reducing power of the vanadium compound, the reduction reaction rate of the vanadium compound may be controlled.

The redox additive of the present invention may satisfy the correlation between the input amount ($M_a$) of the redox additive and the reduction reaction rate ($t_R$) of the vanadium compound represented by Equation 1 below.

[Equation 1]

$$t_R = A\ln(Ma/Mv) + B$$

$t_R$ is reaction time (min), A is a rate constant, B is a concentration constant, Ma is the input amount (g) of the redox additive, and Mv is the input amount (g) of the vanadium compound.

Equation 1 may be obtained as a statistical approximation of a regression analysis technique for experimental data. Here, the constants do not contain any special physical meaning, but constant A is closely related to reduction rate, constant B is closely related to the concentration of vanadium/sulfuric acid/solvent/redox additive, and thus constants A and B are named a rate constant and a concentration constant, respectively.

Equation 1 may be obtained as a statistical approximation of a regression analysis technique for experimental data. Here, the constants do not contain any special physical meaning, but constant A is closely related to reduction rate, and thus constant A is named a rate constant. For example, constant A may be -2.233.

In addition, constant B is closely related to the concentration of vanadium, a sulfate solvent, and a redox additive, and thus constant B is named a concentration constant. For example, constant B may be -3.8086.

According to Equation 1, since process control is possible by predicting the reduction reaction rate of vanadium according to the input amount of the redox additive, reproducibility of a preparation process may be provided, and selectivity of a vanadium raw material may be secured, thereby improving battery performance.

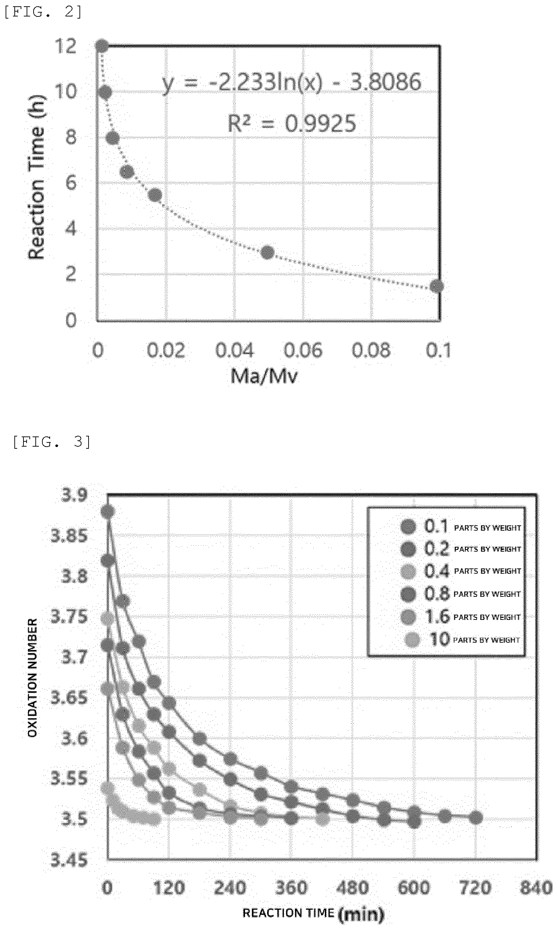

In FIG. 2, it can be confirmed that Equation 1 shows that when reaction temperature and the concentrations of a vanadium compound (raw material)/sulfuric acid/water (solvent) are constant, reaction rate ($t_R$) and the input amount (Ma) of a redox additive have a proportional negative correlation and follows the Arrhenius equation.

By satisfying Equation 1, the reduction reaction rate of a vanadium compound may be predicted according to the input amount of a redox additive. Thus, process control may be possible, and reproducibility of a preparation process and selectivity of a vanadium raw material may be secured, thereby improving battery performance.

The redox additive may be selected from an ionic metal or a compound derived from the ionic metal having solubility in a vanadium electrolyte solution.

The ionic metal may be a reversible transition metal that may repeatedly serve as an intermediate in the redox reaction between a reducing agent and vanadium.

The redox additive has the following properties. 1) The redox additive has a higher reduction rate than vanadium ions, and thus has an electrochemical/mechanical potential in which the redox additive is self-oxidized while reducing vanadium ions by a reduced component. 2) The redox additive is reversible and may repeatedly serve as an intermediate for the redox reaction between a nitrogen-based reducing agent and a vanadium compound. 3) By controlling the input amount of a redox additive according to the main component (metal) content of the redox additive contained in a vanadium compound, the reduction reaction rate of the vanadium compound may be reduced and reaction time may be controlled. For example, when an ionic metal component, which is the main component of the redox additive, is included in an electrolyte solution in an amount of less than 280 ppm, battery performance may be maximized, and reaction time may be reduced to 8 hours or less. The ionic metal component may be selected from transition metals or salts thereof having a solubility of 0.1 ppm or more in the vanadium electrolyte solution.

In the present disclosure, the vanadium raw material may be a 2.0- to 5.0-valent vanadium compound, and at least a portion of the electrolyte solution may be a 3.3- to 3.7-valent vanadium compound.

In the present disclosure, unless otherwise specified, the vanadium raw material may be a low-quality compound having a purity of 90 % or more and less than 99.9 % or a high-quality compound having a purity of 99.9 % or more.

For example, the vanadium raw material may be a pentavalent vanadium compound or a tetravalent vanadium compound. The pentavalent vanadium compound may include one or more selected from $V_2O_5$, $NH_4VO_3$, and $NaVO_3$, and the tetravalent vanadium compound may be $VOSO_4 \cdot xH_2O$ (here, x is an integer from 1 to 6).

Specifically, starting materials for preparing the vanadium electrolyte solution include a pentavalent or tetravalent vanadium compound, sulfuric acid, and a solvent, the pentavalent or tetravalent vanadium compound undergoes a dehydration reaction with sulfuric acid by a nitrogen-based reducing agent, nitrogen gas is generated while the vanadium compound is reduced, the redox additive undergoes a dehydration reaction with sulfuric acid, and the redox additive in an aqueous solution state is reduced by the nitrogen-based reducing agent to generate nitrogen gas and sulfuric acid. Then, when the reduced vanadium compound is additionally reduced and self-oxidized, mass production is possible through a chemical reduction reaction alone without an electrolysis reaction, a reduction process may be simplified, reaction efficiency may be maximized, a high-quality electrolyte solution may be prepared, and thus the performance of a battery including the electrolyte solution may be improved.

In the present disclosure, the vanadium electrolyte solution may include a 3.3- to 3.7-valent vanadium compound. In this case, the 3.3- to 3.7-valent vanadium compound may be prepared by reducing a vanadium compound using sulfuric acid, a reducing agent, and a solvent.

As described above, the reduction reaction of the vanadium compound may be performed in an acidic solution containing sulfuric acid.

For example, reduction reaction of a vanadium compound ($V_2O_5$), an acidic solution ($H_2SO_4$), and a nitrogen-based reducing agent ($N_2H_4 \cdot H_2O$) may be performed as shown in Reaction Formula 1 below.

[Reaction Formula 1] $\quad$ $4V_2O_5 + 10H_2SO_4 + 3N_2H_4 \cdot H_2O \rightarrow 4VO(SO_4) + 2V_2(SO_4)_3 + 19H_2O + 3N_2$

A vanadium compound having a 4.0-valent oxidation number prepared through the reduction process according to Reaction Formula 1 may form a specific compound with an acidic solution (hereinafter referred to as "acid") and a reducing solvent (hereinafter referred to as "solvent"). For example, when the solvent is water, the specific compound may be a compound containing $VO^{2+}$, $[VO(H_2O)_5]^{2+}$, or $[VO(OH)_2(H_2O)_4]^+$ ions.

In addition, a vanadium compound having a 2.0-valent oxidation number prepared through the reduction process may form a specific compound with an acid and a solvent. For example, when the solvent is water, the specific compound may be a compound containing $V^{2+}$ and $[V(H_2O)_6]^{2+}$ ions.

A vanadium compound having a 3.0-valent oxidation number prepared through the reduction process may form a specific compound with an acid and a solvent. For example, when the solvent is water, the specific compound may be a compound containing $V^{3+}$, $[V(H_2O)_6]^{3+}$, $[V(OH)(H_2O)_5]^{2+}$, or $[V(OH)_2(H_2O)_4]^+$ ions.

A vanadium compound having a 5.0-valent oxidation number prepared through the reduction process may form a specific compound with an acid and a solvent. For example, when the solvent is water, the specific compound may be a compound containing $VO_2^+$, $V_2O_3^{4+}$, $[VO_2(H_2O)_3]^+$, or $[V_2O_3(H_2O)_8]^{4+}$ ions.

A vanadium compound having an oxidation number of greater than 3.0 and less than 4.0 prepared through the reduction process may be mixed with vanadium compounds having 3.0-valent and 4.0-valent oxidation numbers. For example, when the solvent is water, a compound containing a mixture of one or more ions selected from $V^{3+}$, $[V(H_2O)_6]^{3+}$, $[V(OH)(H_2O)_5]^{2+}$, and $[V(OH)_2(H_2O)_4]^+$ and $VO^{2+}$, $[VO(H_2O)_5]^{2+}$, or $[VO(OH)_2(H_2O)_4]^+$ ions may be formed.

The above-described acid is a sulfate-based substance. When the solvent is water, in a prepared vanadium compound having a 3.3-valent oxidation number, a molar ratio of $VOSO_4$ to $V_2(SO_4)_3$ may be 6:5.5 to 6.5. In a vanadium compound having a 3.5-valent oxidation number, a molar ratio of $VOSO_4$ to $V_2(SO_4)_3$ may be 2: 0.5 to 1.5. In a vanadium compound having a 3.7-valent oxidation number, a molar ratio of $VOSO_4$ to $V_2(SO_4)_3$ may be 14:2.5 to 3.5.

In the present disclosure, the description of $nH_2O$ is omitted to indicate V3.3, V3.5, and V3.7 as the molar ratio of tetravalent and trivalent ions, but the omission does not mean that $nH_2O$ is not included.

In the present disclosure, the redox additive may play a role in promoting the reduction reaction of a vanadium compound. Specifically, the redox additive may control the reduction reaction rate of a vanadium compound by a nitrogen-based reducing agent depending on an input amount in the electrolyte solution of a vanadium redox flow battery, and satisfies the correlation corresponding to Equation 1 described above.

Another embodiment of the present invention provides information on a vanadium electrolyte solution derived from a pentavalent vanadium compound. At this time, the pentavalent vanadium compound may be a low-quality or high-quality compound.

Based on 100 parts by weight of vanadium included in the pentavalent vanadium compound, the vanadium electrolyte solution may include 15 to 35 parts by weight of a nitrogen-based reducing agent in combination with an appropriate amount of sulfuric acid and a solvent.

In the vanadium electrolyte solution, when the input amount of the redox additive is adjusted according to the content of an ionic metal component, which is the main component of the redox additive, reproducibility may be secured through reducing a reduction reaction rate and controlling reaction time.

In the present disclosure, specifically, the redox additive may or may not contain more than 0.1 ppm of the major metal components of a redox additive.

For example, when an ionic metal as the main component of a redox additive is included in an electrolyte solution in an amount of 280 ppm, a process may be performed within 8 hours while maximizing battery performance.

The vanadium electrolyte solution may include a 2.0- to 5.0-valent vanadium compound. In particular, at least a portion of the electrolyte solution may include a 3.3- to 3.7-valent vanadium compound.

In this case, the 3.3- to 3.7-valent vanadium compound may be reduced from a vanadium raw material using sulfuric acid, a reducing agent, ultrapure distilled water, and the redox additive.

Based on 100 parts by weight of the vanadium raw material, the vanadium electrolyte solution may include 15 to 35 parts by weight of a pentavalent hydrazine compound. As a specific example, to reduce a pentavalent vanadium compound to tetravalent vanadium, 16 parts by weight or more of $N_2H_4$ is required based on 100 parts by weight of the vanadium raw material. To reduce a pentavalent vanadium to 3.5-valent vanadium, 24 parts by weight or more of $N_2H_4$ is required based on 100 parts by weight of the vanadium raw material.

The redox additive is preferably adjusted so that the amount of Mo per 1 L of an electrolyte solution is about 270 ppm. The input amount may be adjusted depending on the presence or absence of an ionic metal, which is the main component of a redox additive, in a vanadium raw material. For example, when there is no Mo as an ionic metal component, it is desirable to add 4 mM Mo per 1 L of an electrolyte solution. For each addition of 1 mM Mo, approximately 70 ppm is dissolved in the electrolyte solution.

The acid and solvent may be appropriately adjusted depending on the type and purpose of the electrolyte solution.

In another embodiment of the present invention, when reducing pentavalent vanadium to tetravalent vanadium, based on 100 parts by weight of $V_2O_5$ as a raw material, 17.5 parts by weight of $N_2H_4 \cdot H_2O$, 108 parts by weight or more of $H_2SO_4$ based on 98 % concentration, and 100 parts by weight or more of DIW may be included.

In another embodiment of the present invention, when reducing pentavalent vanadium to 3.5-valent vanadium, based on 100 parts by weight of $V_2O_5$ as a raw material, 26 parts by weight or more of $N_2H_4 \cdot H_2O$, 135 parts by weight or more of $H_2SO_4$, and 110 parts by weight or more of DIW may be included.

For example, the vanadium electrolyte solution of the present invention may be prepared by using 400 parts by weight or less of an acid, 38 parts by weight or less of a nitrogen-based reducing agent, 700 parts by weight or less of a solvent, and 0.1 to 1.6 parts by weight of a redox additive based on 100 parts by weight of $V_2O_5$ in the pentavalent vanadium compound. Specifically, the vanadium electrolyte solution may be prepared by using 100 to 400 parts by weight of an acid, 14 to 38 parts by weight of a nitrogen-based reducing agent, 300 to 700 parts by weight of a solvent, and 0.1 to 1.6 parts by weight of a redox additive.

For example, as the nitrogen-based reducing agent, hydrazine hydrate, as a specific example, hydrazine monohydrate may be used without being limited thereto.

The vanadium electrolyte solution may be prepared by using preferably 200 to 400 parts by weight of an acid, 14 to 30 parts by weight of a nitrogen-based reducing agent, 500 to 700 parts by weight of a solvent, and 0.2 to 1.6 parts by weight of a redox additive, more preferably 200 to 300 parts by weight of an acid, 20 to 30 parts by weight of a nitrogen-based reducing agent, 500 to 600 parts by weight of a solvent, and 0.2 to 1.2 parts by weight of a redox additive, still more preferably 250 to 300 parts by weight of an acid, 24 to 28 parts by weight of a nitrogen-based reducing agent, 500 to 550 parts by weight of a solvent, and 0.2 to 0.8 parts by weight of a redox additive. Within these ranges, reaction time may be reduced, reaction efficiency may be excellent, a high-purity and high-quality vanadium electrolyte solution may be prepared, and the charging/discharging capacity of a battery including the electrolyte solution may be improved.

In the above-described embodiments, based on 100 parts by weight $V_2O_5$ as a raw material, the redox additive may be included in an amount of 0.1 to 1.6 parts by weight.

For example, when $MoO_3$ as the redox additive is used in an amount of 1.6 parts by weight, the Mo content in the electrolyte solution may be 1,120 ppm, the amount of $MoO_3$ added per 1 L may be 2.4 g, and 0.016 Mol % may be achieved based on the electrolyte solution.

In the present disclosure, the reaction time may be, for example, 3 to 13 hours.

The molar concentration (M; mol/L) ratio of the pentavalent vanadium compound ($V_2O_5$) to the nitrogen-based reducing agent may be 1:0.1 to 1.6 or 1:0.2 to 0.4. Within this range, by achieving an appropriate molar concentration ratio with an acid, a solvent, and a redox additive, the effects of the present invention may be easily achieved.

For example, the molar concentration (M; mol/L) ratio of the pentavalent vanadium compound ($V_2O_5$), the acid, the nitrogen-based reducing agent, and the redox additive may be 1:2 to 3:0.2 to 0.4:0.001 or more and less than 0.25, as a specific example, 1:2 to 3:0.3 to 0.4:0.001 or more and less than 0.05, preferably 1:2.3 to 2.7:0.36 to 0.39:1.002 or more and less than 0.02, more preferably 1:2.4 to 2.6:0.37 to 0.38:0.003 to 0.01. Within this range, reaction time may be reduced, reaction efficiency may be excellent, a high-purity and high-quality vanadium electrolyte solution may be prepared, and the charging/discharging capacity of a battery including the electrolyte solution may be improved.

For example, the redox additive may be included in the vanadium electrolyte solution in an amount of 1 to 6,000 ppm, preferably 10 to 3,000 ppm, more preferably 50 to 1,500 ppm, still more preferably 100 to 1,000 ppm, most preferably 200 to 800 ppm.

After the vanadium electrolyte solution preparation process, including reaction and a filtration process, is completed, the redox additive may be included in the vanadium electrolyte solution in an amount of 1 ppm or more and less than 1,500 ppm.

Even when the redox additive contains other additives to improve electrolyte solution performance, the redox additive may provide the reducing power of the vanadium ions of a nitrogen-based reducing agent and may be involved in a reduction rate without affecting a reduction amount. For example, when preparing a vanadium electrolyte solution, even when 20 parts by weight or less of $H_3PO_4$ known as a heat stabilizer is added based on 100 parts by weight of $V_2O_5$ as a raw material, the reducing effect of the redox additive is not affected.

Even when the above-described $H_3PO_4$ is included and $PO_4$-based substances such as $(NH_4)H_2PO_4$ and $(NH_4)_3PO_4$, chlorine-based substances such as HCl, $MgCl_2$, and $CaCl_2$, and additives such as a cationic surfactant, an anionic surfactant, a positive surfactant, and a nonionic surfactant are added in an amount of 20 parts by weight or less based on 100 parts by weight of $V_2O_5$ as a raw material, the reducing effect of the redox additive is not affected, and the unique functions of various additives are not affected by the redox additive.

According to another embodiment of the present invention, details on a vanadium electrolyte solution derived from a tetravalent vanadium compound are described. The tetravalent vanadium compound may also be a low-quality or high-quality compound.

Based on 100 parts by weight of vanadium included in the tetravalent vanadium compound, the vanadium electrolyte solution may be prepared using appropriate amounts of an acid and a solvent and 10 to 20 parts by weight of a nitrogen-based reducing agent, and may be included in the tetravalent vanadium compound by adjusting the input amount of the redox additive according to the content of ionic metals of the redox additive.

The main components of the redox additive may be included in the vanadium electrolyte solution in an amount of 1 ppm or more and less than 1,500 ppm.

In the present disclosure, for example, in the case of $VOSO_4$ among the tetravalent vanadium compounds, the vanadium electrolyte solution may be prepared using 400 parts by weight or less of an acid, 25 parts by weight or less of a nitrogen-based reducing agent, 700 parts by weight or less of a solvent, and 0.1 to 1.6 parts by weight of a redox additive based on 100 parts by weight of $VOSO_4$. Specifically, the vanadium electrolyte solution may be prepared using 100 to 400 parts by weight of an acid, 1 to 25 parts by weight of a nitrogen-based reducing agent, 300 to 700 parts by weight of a solvent, and 0.1 to 1.6 parts by weight of a redox additive, preferably 200 to 400 parts by weight of an acid, 2 to 20 parts by weight of a nitrogen-based reducing agent, 500 to 700 parts by weight of a solvent, and 0.2 to 1.6 parts by weight of a redox additive, more preferably 200 to 300 parts by weight of an acid, 4 to 15 parts by weight of a nitrogen-based additive, 500 to 600 parts by weight of a solvent, and 0.2 to 1.2 parts by weight of a redox additive, still more preferably 250 to 300 parts by weight of an acid, 6 to 10 parts by weight of a nitrogen-based reducing agent, 500 to 550 parts by weight of a solvent, and 0.2 to 0.8 parts by weight of a redox additive. Within these ranges, reaction time may be reduced, reaction efficiency may be excellent, a high-purity and high-quality vanadium electrolyte solution may be prepared, and the charging/discharging capacity of a battery including the electrolyte solution may be improved.

For example, the redox additive may be included in the vanadium electrolyte solution in an amount of 1 to 6,000 ppm, preferably 10 to 3,000 ppm, more preferably 50 to 1,500 ppm, still more preferably 100 to 1,000 ppm, most preferably 200 to 800 ppm.

Even when various additives are added to improve the performance of the electrolyte solution, the redox additive provides the reducing power of vanadium ions and is involved in a reduction rate without being involved in a reduction amount. For example, when preparing a vanadium electrolyte solution, even when $H_3PO_4$, known as a representative additive for improving temperature stability, is added in an amount of 20 parts by weight or less based on 100 parts by weight $V_2O_5$ as a raw material, the reducing effect of the redox additive is not affected. Even when the above-described $H_3PO_4$ is included and $PO_4$-based substances such as $(NH_4)H_2PO_4$ and $(NH_4)_3PO_4$, Cl-based substances such as HCl, $MgCl_2$, and $CaCl_2$, a cationic surfactant, an anionic surfactant, a positive surfactant, and a nonionic surfactant are added in an amount of 20 parts by weight or less based on 100 parts by weight of $V_2O_5$ as a raw material, the effect of the redox additive as a reducing agent is not affected, and the functions of various additives are not affected by the redox additive.

In one embodiment of the present invention, a method of preparing a vanadium electrolyte solution will be described in detail.

For example, the method of preparing a vanadium electrolyte solution may include a first step of reducing a pentavalent vanadium compound to a tetravalent vanadium compound as a vanadium compound; and a second step of reducing the tetravalent vanadium compound to a 3.3- to 3.7-valent vanadium compound. A redox additive may be introduced in at least one of the first and second steps, and may consist of a material having lower reducing power than that of a nitrogen-based reducing agent used to reduce a vanadium compound in the first step.

Preferably, the first step sequentially includes step i) of adding a pentavalent vanadium compound and water, step ii) of adding a nitrogen-based reducing agent, and step iii) of adding a sulfuric acid. In this case, process time may be reduced, reaction efficiency may be excellent, and a tetravalent vanadium electrolyte solution may be obtained while minimizing decomposition of the reducing agent.

As a specific example, the nitrogen-based compound may be a hydrazine compound.

The hydrazine compound may preferably be added in the form of a hydrate or an aqueous solution. In this case, water is preferably used in a weight ratio of 95 or more based on a weight ratio of 100 of the hydrazine compound.

In the example to be described later, a weight ratio of 200 to 500 of water is used based on a weight ratio of 100 of the hydrazine compound to dilute the hydrazine compound. There is no specific ratio, but the total amount of water required to prepare the electrolyte solution should be the same. When using a hydrazine compound in hydrated form, a reaction rate may be reduced, and reaction may be performed stably. Thus, reaction efficiency may be excellent, and a high-purity and high-quality vanadium electrolyte solution may be prepared.

The hydrazine hydrate is preferably hydrazine monohydrate, and the hydrazine salt is preferably hydrazine sulfate. In this case, by-products that degrade the quality of the electrolyte solution are not generated, and thus a high-purity and high-quality vanadium electrolyte solution may be prepared.

The entire amount of the nitrogen-based reducing agent may be added in the first step, or the nitrogen-based reducing agent may be added in a split manner, i.e., a portion of the nitrogen-based reducing agent may be added in the first step and then the remainder may be added in the second step. As an example of split addition, 60 to 80 % by weight of the total amount may be added in the first step and 20 to 40 % by weight of the total amount may be added in the second step. Preferably, 60 to 70 % by weight is added in the first step and 30 to 40 % by weight may be added in the second step. The addition method of the nitrogen-based reducing agent may be appropriately selected from among the addition methods commonly used in the technical field to which the present invention pertains, depending on the purpose of preparing the vanadium electrolyte solution or the process situation.

The redox additive undergoes a dehydration reaction with the sulfuric acid in the first step to generate an aqueous solution, and then undergoes self-reduction to oxidize the nitrogen-based reducing agent to generate nitrogen gas.

The redox additive may include one or more selected from molybdenum metal, molybdenum oxide ($MoxOy$), molybdenum nitride ($MoxNy$), molybdenum chloride ($MoxCly$), molybdenum sulfide ($MoxSy$), molybdenum phosphide ($MoxPy$), molybdenum carbonate ($MoxCy$), molybdenum metal oxide ($MoxMyOz$), molybdenum metal nitride ($MoxMyNz$), molybdenum metal chloride ($MoxMyClz$), molybdenum metal sulfide ($MoxMySz$), molybdenum metal phosphide ($MoxMyPz$), and molybdenum metal carbonate ($MoxMyCz$).

A metal of the redox additive may be an element selected from Al, As, Ba, Ca, Cd, Co, Cr, Cu, Fe, Ga, K, Mg, Mn, Na, Ni, Pb, Si, Sn, Ti, Zn, Au, Ag, Pt, Ru, Pd, Li, Ir, W, Nb, Zr, Ta, Ge, and In or an alloy of a plurality of elements selected from Al, As, Ba, Ca, Cd, Co, Cr, Cu, Fe, Ga, K, Mg, Mn, Na, Ni, Pb, Si, Sn, Ti, Zn, Au, Ag, Pt, Ru, Pd, Li, Ir, W, Nb, Zr, Ta, Ge, and In, and x, y(x/y) or x,y, and z(x/y/z) may independently be an integer of 0 or 1.

The redox additive in the form of an aqueous solution dehydrated with sulfuric acid may be used to reduce the tetravalent vanadium compound in the second step.

Specifically, the redox additive in the form of an aqueous solution formed through dehydration reaction with sulfuric acid is self-oxidized and reduces the tetravalent vanadium compound to a 3.3- to 3.7-valent vanadium compound, preferably to a 3.4- to 3.6-valent vanadium compound, most preferably to a 3.5-valent vanadium compound. In this case, a high-purity and high-quality vanadium electrolyte solution may be prepared.

In the second step, heating may be performed at preferably 70 to 120 °C, more preferably 80 to 115 °C, still more preferably 90 to 110 °C, still more preferably 100 to 110 °C. In this case, reaction time may be reduced, reaction efficiency may be excellent, and a high-purity and high-quality vanadium electrolyte solution may be prepared.

In the second step, heating time may be 12 hours or less, preferably 1 to 10 hours, more preferably 2 to 8 hours, still more preferably 3 to 8 hours, most preferably 4 to 8 hours. In this case, reaction efficiency may be excellent, and a high-purity and high-quality vanadium electrolyte solution may be prepared.

For example, the first and second steps may be performed under atmospheric pressure. When necessary, the pressure may be increased or decreased within the range that satisfies the above-described reaction conditions.

The method of preparing an electrolyte solution may preferably include a filtration step after the first step or the second step. More preferably, the method of preparing an electrolyte solution may include a first filtration step after the first step and a second filtration step after the second step. In this case, a high-purity and high-quality vanadium electrolyte solution may be prepared without excessively increasing process time.

The filtration may include gravity filtration using gravity, pressure filtration performed by pressurizing the upper layer of a filtration means, and vacuum filtration performed by depressurizing the lower layer of a filtration means. In addition, the filtration may be performed using a filtration means that is made of a hydrophilic material, has acid resistance, and has a pore size of 0.2 to 10 $\mu$m. In particular, when the pore size is less than 0.2 pm, due to increased process time or pressure load, quality may deteriorate. When the pore size exceeds 10 pm, the filtration effect may be insignificant.

When a filtration aid such as diatomaceous earth is used in combination with the filtration means, impurities are primarily removed by the filtration aid before a filtrate reaches the filtration means, thereby reducing a filtration load on the filtration means.

In this case, impurities that deteriorate the properties of an electrolyte solution may be filtered out through a physical filtration means without significantly affecting the overall process time. At the same time, the electrolyte solution may completely pass through the filtration means. Thus, a high-purity and high-quality vanadium electrolyte solution may be prepared.

Preferably, the pentavalent vanadium compound may be $V_2O_5$, the tetravalent vanadium compound may be $VOSO_4$, and the 3.3- to 3.7-valent vanadium compound may be a mixture of $VOSO_4$ and $V_2(SO_4)_3$. In this case, a high-purity and high-quality vanadium electrolyte solution may be prepared.

In the method of preparing an electrolyte solution, when necessary, a redox additive may be used in combination with a catalyst in the first or second step to facilitate reduction reaction.

The catalyst acts as a catalyst in the first step, especially the second step. After performing the role of a catalyst, the catalyst may be separated from the electrolyte solution. After adding the catalyst in the first step and completing the reaction, filtration is performed in the second step. Alternatively, after the first step filtration, the catalyst is added in the second step, the reaction is completed, and then filtration is performed again. Alternatively, a method in which a reactant is introduced into a catalyst facility and a reduction reaction is performed may be used.

In the present disclosure, the main component of the catalyst may be a metal such as Pt, Pd, or Ru, and a representative example may be a Pt catalyst. Pt catalysts commonly used in the technical field to which the present invention pertains may be used as the Pt catalyst of the present invention without particular limitation.

In the present disclosure, the method of preparing a vanadium electrolyte solution includes step (A) of preparing a reaction mixture by adding a pentavalent vanadium compound to a solvent and then adding a nitrogen-based reducing agent thereto; step (B) of reducing the pentavalent vanadium compound to a tetravalent vanadium compound while performing a dehydration reaction by adding sulfuric acid and a redox additive to the reaction mixture; step (C) in which the dehydration reactant oxidizes the nitrogen-based reducing agent to generate nitrogen gas and a self-reduced product; and step (D) in which the self-reduced product is oxidized by heating the reactant and the tetravalent vanadium compound is reduced to a 3.3- to 3.7-valent vanadium compound. In this case, an entire amount of the nitrogen-based reducing agent may be added in step (A), or the nitrogen-based reducing agent may be added in steps (A) and (D) in a split manner.

The redox additive may include a vanadium redox flow electrolyte aqueous solution or an electrolyte solution for non-aqueous vanadium redox flow such as vanadium acetylacetone, and may be used in preparation of a vanadium electrolyte solution that provides vanadium ions used in a vanadium redox flow battery and the mechanical and electromagnetic actuation of a vanadium redox flow battery using the same without particular limitation.

The vanadium electrolyte solution may be included in both positive and negative electrodes.

When the redox additive is added to the electrolyte solution preparation process, the reaction rate may be reduced by promoting the reduction reaction. In addition, when a vanadium redox flow battery operates, it is assumed that the energy transfer material of an additive material between vanadium ions that are activated by electric field energy contributes to the electron mobility of vanadium ions, thereby contributing to improving the charging/discharging capacity and energy efficiency of a battery. Adding the redox additive above a certain concentration is desirable to improve the reaction rate. However, when an excess of the redox additive is added, due to an increase in viscosity due to excessive mutual attraction between vanadium ions and the redox additive, force that hinders the diffusion of vanadium ions increases, which may negatively affect charging/discharging capacity and energy efficiency.

Considering improvement in reaction rate and battery performance, the redox additive is preferably included in the electrolyte solution at a concentration of about 0.2 to 2 mol %. The concentration of the redox additive must be more than 0.2 mol % to be effective in improving the reaction rate and performance, and when the concentration exceeds 2 mol %, the above-described negative effects may occur. Considering the reaction rate and electrolyte solution performance, the redox additive may be included in the electrolyte solution preferably at 0.2 to 1.0 mol %, more preferably at 0.2 to 0.8 mol %.

As described above, the redox additive participates in the reaction in an aqueous solution through a dehydration reaction with sulfuric acid, so by-products derived from the redox additive are not produced.

Step (D) may be performed by applying the reduction reaction time of the vanadium compound calculated by substituting the reaction temperature of 70 to 120 °C and the input amount of the redox additive into the above-described Equation 1.

[Equation 1]

$$t_R = A\ln(Ma/Mv) + B$$

In Equation 1, $t_R$ is reaction time (min), A is a rate constant, B is a concentration constant, Ma is an input amount (g) of a redox additive, and Mv is an input amount (g) of a vanadium compound.

When the vanadium electrolyte solution prepared using the redox additive of the present invention is measured at a current density of 100 mA/cm$^2$, a discharge cutoff voltage of 0.8 V, a charge cutoff voltage of 1.6 V, and a flow rate of 180 ml/min, within the first 30 cycles, charging capacity and charging/discharging capacity may be improved by an average of more than 5 %, preferably more than 6.5 % per cycle, compared to a case in which the redox additive is not added. In addition, energy efficiency may be improved by more than 0.5 %, preferably more than 1 %.

In the present disclosure, charging capacity refers to the state in which charge is accumulated up to a charging cutoff voltage, charging/discharging capacity refers to the state in which charge is emptied up to a discharging cutoff voltage, and energy efficiency refers to charging capacity compared to charging/discharging capacity. The three factors may be provided as indicators to judge the lifespan and performance of an electrolyte solution.

The redox additive of the present invention may provide an electrolyte solution having improved battery capacity and energy efficiency.

In the present disclosure, by adding the redox additive, a high-efficiency, high-quality, high-performance vanadium electrolyte solution may be prepared economically. The vanadium electrolyte solution may be applied to all fields where vanadium redox flow batteries are used, such as new renewable energy, smart grid, and power plants.

In one embodiment of the present invention, the method of preparing a vanadium electrolyte solution will be described in more detail.

For example, in the method of preparing a vanadium electrolyte solution described above, when a vanadium electrolyte solution is prepared, when a solvent is added in a split manner and the input amount and input time thereof are controlled, an optimized process that improves reaction rate and reduces impurities may be provided.

In the present disclosure, the solvent is used to reduce a vanadium compound to a 3.3- to 3.7-valent vanadium compound. Unless otherwise specified, the solvent may be purified water, preferably deionized water or ultrapure distilled water.

The method of preparing a vanadium electrolyte solution of the present invention may include a first step of reacting a vanadium compound, a reducing agent, and an acid in 5 to 15 mol of a pre-solvent per 1 mole of the vanadium compound to generate a reduced vanadium compound; a second step of cooling the reduced vanadium compound after the reaction is completed; a third step of adding a post-solvent after the cooling step; and the fourth step of filtering the reaction solution after adding the post-solvent. In this case, the overall reaction time may be reduced, reproducibility of a preparation process may be ensured, and impurities may be reduced through improvement of reaction efficiency. In addition, mass production of an electrolyte solution is possible through a chemical reaction process in a single reactor, reduction process may be reduced, reaction efficiency may be maximized, a high-yield and high-quality electrolyte solution may be prepared, and the battery performance of a battery including the electrolyte solution may be improved.

In the present disclosure, unless otherwise specified, the solvent used to reduce vanadium in the first step is called a pre-solvent, and the solvent used to adjust the composition of vanadium obtained by the reduction reaction described above in the third step is called a post-solvent.

In the first step, a vanadium compound, a reducing agent, and an acid are reacted in 5 to 15 mol of a pre-solvent per 1 mol of the vanadium compound to generate a reduced vanadium compound.

In the present disclosure, instead of adding reactants including a vanadium compound, a reducing agent, sulfuric acid, and a pre-solvent at the same time, when the vanadium compound and the solvent are reacted, the reducing agent is added, and then the acid is added, formation of by-products such as hydrazine salts may be prevented, and thus a high-purity vanadium compound may be produced in high yield.

For example, the pre-solvent may be deionized water, ultrapure distilled water, or a mixture thereof.

As the amount of the pre-solvent used is reduced, a reaction rate may be improved and impurities may be reduced.

Specifically, as the amount of the pre-solvent used is reduced, the reduction reaction may be performed more quickly by increasing interaction between reactants, including a vanadium compound, a reducing agent, and a reaction accelerator.

In addition, as the amount of the pre-solvent used is reduced, by increasing the ion ratio of the acid to the vanadium compound, ionization of the vanadium compound may be much faster.

In addition, as the amount of the pre-solvent used is reduced, during electrolyte solution charge/discharge behavior, impurities such as Al and Si, which are known to have an effect of reducing electrode activation surface and hindering hole mobility in a membrane, may be reduced. Thus, the preparation time may be reduced, and the performance of a battery using the electrolyte solution may be maximized.

In the present disclosure, when a vanadium pentavalent compound is used as a raw material, in this reduction reaction, when there are at least 5 mol of water molecules per 1 mol of a vanadium compound, pentavalent vanadium ions are converted into a solid tetravalent compound in the form of an octahedral coordination bond due to the paramagnetism and strong metal polarization force of vanadium ions.

Since the solid tetravalent compound may be converted into 1 mol of a liquid vanadium trivalent compound when there is 1 mol of water molecules per mol, to perform a reduction reaction to a 3.3- to 3.7-valent compound, at least 5.5 mol is required as a theoretical value without considering the viscosity of the vanadium compound or uniform reaction of the reducing agent, but an additional solvent is required in the actual reaction process. Accordingly, when at least 6 mol of the pre-solvent, which is more than 5.5 mol per 1 mol of the vanadium compound, is added, a 3.5-valent vanadium compound of liquid or slush type is obtained.

When obtaining a 3.5-valent vanadium compound using the above-described slush type 3.5-valent vanadium compound, tetravalent vanadium and impurities thereof present in a solid state in the slush are not removed and remain in the 3.5-valent vanadium compound even when the post-solvent described later is added. As a result, the tetravalent vanadium and the impurities may temporarily affect the surfaces of electrodes and a membrane, resulting in abnormal behavior such as noise at the beginning of charging and discharging.

For this reason, it is desirable to use 8 mol or more or 8 to 15 mol of the pre-solvent to perform the reaction under slush or liquid conditions to implement an optimized vanadium electrolyte solution preparation process.

In the present disclosure, the post-solvent plays a role in controlling the composition of the above-described liquid 3.3- to 3.7-valent electrolyte solution, and the input amount of the post-solvent depends on the composition ratio of vanadium and sulfuric acid input as raw materials.

Specifically, unless otherwise specified, for an electrolyte solution having a composition of 1.6 mol vanadium and 4.0 mol sulfuric acid, a 42 to 44 mol solvent is required. Here, when A mol of water is used as the pre-solvent, the post-solvent is added in an amount excluding the amount of the pre-solvent (A mol).

As shown in the examples below, it can be seen that an optimized vanadium electrolyte solution preparation process may be implemented by maintaining the contents of the pre-solvent and the post-solvent within a specific ratio range.

In the present disclosure, the vanadium electrolyte solution may include a 2.0- to 5.0-valent vanadium compound, and at least a portion of the electrolyte solution may be a 3.3- to 3.7-valent vanadium compound.

In this case, the 3.3- to 3.7-valent vanadium compound may be reduced from the vanadium compound using an acid, a reducing agent, and a solvent.

In the present disclosure, as the vanadium compound, a low-quality or high-quality compound may be used.

The low-quality vanadium compound refers to a vanadium compound that has a purity of 99 % or more, specifically 99 % or more and less than 99.9 %, and contains a relatively excessive amount of impurities.

The high-quality vanadium compound refers to a vanadium compound that has a purity of 99.9 % or more and contains a relatively small amount of impurities.

The low-quality vanadium compound or high-quality vanadium compound may be any commercially available product as long as the product complies with the definitions in this description. When using the low-quality vanadium compound, manufacturing costs may be reduced. When using the high-quality vanadium compound, performance may be increased.

In addition, in the present disclosure, the vanadium compound used to prepare the vanadium electrolyte solution may be a pentavalent vanadium compound or a tetravalent vanadium compound. For example, the pentavalent vanadium compound may be $V_2O_5$, and the tetravalent vanadium compound may be $VOSO_4 \cdot xH_2O$. In addition, unless otherwise specified, the 3.3- to 3.7-valent vanadium compound may be a mixture of $VOSO_4$ and $V_2(SO_4)_3$.

A vanadium electrolyte solution having a 2.0-valent oxidation number obtained through the reduction reaction may form a specific compound with an acid and a solvent. For example, when the solvent is water, the specific compound may be a compound including $V^{2+}$ and $[V(H_2O)_6]^{2+}$ ions.

A vanadium electrolyte solution having a 3.0-valent oxidation number obtained through the reduction reaction may form a specific compound with an acid and a solvent. For example, when the solvent is water, the specific compound may be a compound including $V^{2+}$, $[V(H_2O)_6]^{3+}$, $[V(H_2O)_5]^{2+}$, or $[V(OH)_2(H_2O)_4]^+$ ions.

A vanadium electrolyte solution having a 4.0-valent oxidation number obtained through the reduction reaction may form a specific compound with an acid and a solvent. For example, when the solvent is water, the specific compound may be a compound including $V^{2+}$, $[V(H_2O)_5]^{2+}$, or $[V(OH)_2(H_2O)_4]^+$ ions.

A vanadium electrolyte solution having a 5.0-valent oxidation number obtained through the reduction reaction may form a specific compound with an acid and a solvent. For example, when the solvent is water, the specific compound may be a compound including $VO^{2+}$ and $[VO_2(H_2O)_4]^+$ ions.

A vanadium electrolyte solution having an oxidation number of greater than 3.0 valence and less than 4.0 valence obtained through the reduction reaction may be mixed with a vanadium compound having a 3.0- and 4.0-valent oxidation number. For example, when the solvent is water, a compound obtained by mixing $VO^{2+}$, $[VO(H_2O)_5]^{2+}$, or $[VO(OH)(H_2O)4]^+$ ions and $VO^{2+}$ and $[VO_2(H2O)_4]^+$ ions may be used.

As a specific example, through the reduction reaction, when the acid is sulfuric acid and the solvent is water, in the obtained vanadium electrolyte solution having a 3.3-valent oxidation number, the molar ratio of $VOSO_4$ and $V_2(SO_4)_3$ may be 6: 6 to 9 or 6:6 to 8. In the vanadium electrolyte solution having a 3.5-valent oxidation number, the molar ratio of $VOSO_4$ and $V_2(SO_4)_3$ may be 2: 0.5 to 1.5 or 2:0.8 to 1.2. In the vanadium electrolyte solution having a 3.7-valent oxidation number, the molar ratio of $VOSO_4$ and $V_2(SO_4)_3$ may be 14:1 to 5 or 14:2 to 4.

In particular, through the reduction reaction, when the acid is sulfuric acid and the solvent is water, in the obtained vanadium electrolyte solution having a 3.3-valent oxidation number, the molar ratio of $VOSO_4$ and $V_2(SO_4)_3$ may be about 6:7. In the vanadium electrolyte solution having a 3.5-valent oxidation number, the molar ratio of $VOSO_4$ and $V_2(SO_4)_3$ may be about 2:1. In the vanadium electrolyte solution having a 3.7-valent oxidation number, the molar ratio of $VOSO_4$ and $V_2(SO_4)_3$ may be about 14:3. In the present disclosure, unless otherwise specified, the term "about" refers to a value that includes an error range of $\pm 0.5$ with respect to the reference value.

The reducing agent may include one or more hydrazine compounds selected from the group consisting of hydrazine anhydride and a hydrate and salt thereof.

Based on 100 parts by weight of the vanadium compound, the reducing agent may include 15 to 35 parts by weight of a hydrazine compound. For example, when pentavalent vanadium is reduced to tetravalent vanadium, based on 100 parts by weight of vanadium, 16 parts by weight or more of a hydrazine compound is required. When pentavalent vanadium is reduced to 3.5-valent vanadium, 24 parts by weight or more of a hydrazine compound is required. Within this range, reaction time may be reduced, reaction efficiency may be excellent, and a high-purity and high-quality vanadium electrolyte solution may be prepared. In addition, the discharging capacity of a battery including the electrolyte solution may be improved.

As the pre-solvent and the post-solvent, deionized water or ultrapure distilled water may be used. As a specific example, the pre-solvent may be added in an amount of 5 to 15 mol or 8 to 15 mol per 1 mol of the vanadium compound.

For example, in the case of an electrolyte solution having a composition of 1.6 mol vanadium, 4.0 mol sulfuric acid, and 43 mol water, the pre-solvent may be added in an amount of 10 to 24 mol, preferably 13 to 24 mol, and the post-solvent may be added in an amount of 19 to 33 mol, preferably 19 to 30 mol. Within this range, reaction time may be reduced, reaction efficiency may be excellent, and due to reduced impurities, a high-purity and high-quality vanadium electrolyte solution may be prepared. In addition, the discharging capacity of a battery including the electrolyte solution may be improved.

The mixing order of the reactants may be varied, but the most preferred method is to administer the solvent, the vanadium compound, the hydrazine compound, and the acid to a reactor in that order under operation of a stirrer. In this process, a certain amount of pre-solvent may be added in a split manner. For example, some of the pre-solvent may be mixed with the hydrazine compound and diluted before being added, or it is also possible to add the solvent and the vanadium compound and then flush the vanadium compound stuck to the inlet into a reactor by flowing the solvent.

In addition, when there is even a little solvent inside a reactor before adding the vanadium compound, it may be advantageous for dispersion of the vanadium compound. This is because, when adding the solvent after adding the vanadium compound, isolation of the vanadium compound easily occurs between the bottom of the reactor and the vanadium compound-solvent interface, and the isolated and aggregated vanadium compound may create unnecessary load on a stirring system such as stirring propellers or a motor.

For reference, the most undesirable mixing method is directly mixing the vanadium compound and the hydrazine compound. When preparing an electrolyte solution by mixing the vanadium compound and the hydrazine compound, adding the solvent, and then adding the acid in step 2, some of the raw material does not dissolve in the acid and precipitates. In addition, when mixed without the solvent, smoke and heat are generated during a violent reaction, and the vanadium compound turns black. Judging from this phenomenon, it is presumed that a part of the hydrazine compound is decomposed by instantaneous reaction heat and is unable to perform a reducing function after an acid is added, resulting in precipitation in the vanadium compound.

The hydrazine compound may be a hydrate or salt. When the hydrazine compound is hydrazine hydrate, the hydrazine compound may be hydrazine monohydrate, and the hydrazine salt may be hydrazine sulfate.

The hydrazine compound may preferably be added in the form of a hydrate or an aqueous solution. For example, based on a weight ratio of 100 of the hydrazine compound, the minimum weight ratio of water may be preferably 95 or more. Preferably, the total amount of water required to prepare an electrolyte solution should be the same, such as diluting with 200 to 500 parts by weight of water. When using the hydrazine compound in hydrated form at an appropriate ratio, by gently controlling a rapid reaction rate, the process may proceed more stably. Thus, reaction efficiency may be excellent, and a high-purity and high-quality vanadium electrolyte solution may be prepared.

In the mixing process of the reactants, it is necessary to consider the flow rate from the time of adding an acid. The input flow rate of an acid added should be determined considering heat generation of a mixed reaction solution, which is determined from a reactor size and a reactant content.

For example, when preparing a 1 L electrolyte solution having a composition of 1.6 mole vanadium and 4.0 mole sulfuric acid in a 2 L flask, the input flow rate of the acid may be 200 to 300 ml/h, preferably 220 to 260 ml/h, more preferably 230 to 250 ml/h.

Specifically, when an acid is added, rapid heat generation occurs until the same mole amount of the acid as the number of moles of vanadium is added. When a gradual temperature increase or decrease occurs afterward, it is desirable to further increase the input flow rate of the acid or use a heating device to maintain the temperature near a reaction target.

It is desirable to add the acid slowly to prevent the reaction solution from splashing on the walls of the container as much as possible. Since it is important to prevent water in the electrolyte solution from being lost due to exothermic temperature during the acid addition process, a heat control device such as a cooling device or a heater (heat exchanger) may be used, and it is desirable that temperature does not exceed 120 °C.

The acid may be appropriately adjusted to the extent of dissolving a vanadium compound depending on the type of a vanadium compound and the purpose of an electrolyte solution.

The acid may include one or more selected from sulfuric acid, hydrochloric acid, nitric acid, and acetic acid.

For example, based on 100 parts by weight of the vanadium compound, the acid may include 1,000 parts by weight or less of sulfuric acid, as a specific example, 100 to 400 parts by weight of sulfuric acid.

The above-described addition sequence (solvent → vanadium compound → hydrazine compound → sulfuric acid) has two advantages over the injection sequence (solvent → vanadium compound → sulfuric acid → hydrazine compound) in the comparative example below. First, reaction time is short. Second, the reduction efficiency of the reducing agent is high.

For example, when preparing 1 L of an electrolyte solution containing 1.6 mol of vanadium and 4.0 mol of sulfuric acid in a 2 L flask, when sulfuric acid is added to a mixture of a solvent and a vanadium compound prior to a hydrazine compound over 50 to 70 minutes, specifically 55 to 65 minutes, temperature increases from 26 °C to 81 °C. When a hydrazine compound aqueous solution is then added at 240 to 260 ml/hr, it takes about 30 minutes, and the final temperature is confirmed to be 105 °C.

When the hydrazine compound is added later and there is no separate cooling process, the hydrazine compound is added at a high temperature increased by addition of sulfuric acid. Since the hydrazine compound may instantly reduce pentavalent ions to tetravalent ions even at room temperature, high temperature conditions may cause a rather rapid reaction, so the flow rate must be adjusted.

On the other hand, when the hydrazine compound is added first and sulfuric acid is added later, since reduction of hydrazine monohydrate begins at a low temperature, the side effects of temperature increase are relatively small, which may shorten the overall process time.

That is, when the input order of the present invention is used, the component that requires flow rate control is sulfuric acid. On the other hand, when the input order is changed, the components that require flow rate control are sulfuric acid and the hydrazine compound, resulting in difficulties in process time and processing.

In addition, the hydrazine compound decomposes into $NH_3 + NH$ when the temperature exceeds 180 °C, and the hydrazine compound decomposes into $N_2 + 2H_2$ when the temperature exceeds 350 °C. When the hydrazine compound is added at high temperature, heat generated locally increases the possibility that hydrazine is decomposed without being able to play a reducing role. Since this side reaction causes some of the hydrazine to be consumed without participating in a reduction reaction, contrary to actual theory, experimentally, an excess amount of about 4 to 7 % over the stoichiometric ratio must be added to achieve a 3.5 valence. On the other hand, when the hydrazine compound is added first and sulfuric acid is added later, the possibility of the above-described side reaction occurring is low, and 3.5 valencene may be achieved experimentally by adding a small amount of about 3% or less, which increases economic efficiency.

The reaction may be accelerated by using more catalyst or additives in the first step. At this time, the catalysts may include Pt, Ru, and Pd, and the additives may include Mo, $MoO_3$, and $(MoO_2)SO_4$. The catalysts may be recovered and reused.

In the first step, when gaseous by-product ($N_2$) from the reduction process of pentavalent vanadium ions is discharged out of a container, and vaporized $H_2O$ and $H_2SO_4$ are condensed and cooled to remain in a reactor to maintain high temperature, changes in a composition within the reactor may be prevented while maximizing reaction efficiency.

That is, the reaction of the first step is performed under reflux within the reaction temperature range, thereby improving the reaction participation of reactants and further improving productivity.

In the present disclosure, reflux is not particularly limited when the reflux corresponds to a reflux process commonly recognized in the technical field to which the present invention pertains. As a specific example, reflux means connecting a cooler or condenser to the upper inlet of a reactor to condense a solvent evaporated during a reaction and circulating the condensed solvent back into the reactor to continuously perform the reaction.

For example, unless a special pressure device is installed in the reactor, the first step reaction may be performed at 70 to 120 °C, preferably 80 to 120 °C, more preferably 90 to 120 °C, still more preferably 100 to 110 °C. In this case, the reaction participation rate of the reactants may be further increased. In addition, productivity may be improved by reducing preparation time.

For example, the reaction of the first step may be performed for 13 hour or less, preferably 1 to 13 hours, more preferably 2 to 8 hours. When the amount of the pre-solvent is greater than 6 times the mol number of vanadium and is close to 6 times, reaction time may be reduced, and the effect of removing impurities may be excellent. However, 6 times is a theoretical value, and when the actual amount of the pre-solvent is close to 6 times, it may not be easy to prepare an electrolyte solution due to slushing and solidification of the reactants, which varies depending on the characteristics of the vanadium raw material.

Accordingly, it is desirable to add the pre-solvent in an amount of 8.0 times or more than the mol number of vanadium.

In addition, when the pre-solvent exceeds 15 times based on the mol number of vanadium, there is no advantage of adding a solvent in a split manner in two stages of the pre-solvent addition and the post-solvent addition. Accordingly, when the pre-solvent is used in the mol number range of 8 to 15 times the mol number of vanadium, the reaction participation rate of the reactants may be further increased, and productivity may be improved by completing preparation within a relatively short time.

The reaction may preferably proceed under a nonreactive atmosphere such as nitrogen.

In addition, the reaction may be performed under atmospheric pressure, but pressurization or depressurization may be performed as needed within the range that satisfies the reaction conditions described above.

For example, the weight of the solvent included in 100 % by weight in total of the vanadium compound, the reducing agent, sulfuric acid, and the solvent may be 20 to 80 % by weight, preferably 30 to 70 % by weight. In this case, due to a high concentration in a reaction tank, reaction efficiency may be excellent, and purity may further improved.

In the second step, the reduced vanadium compound formed in the first step is cooled.

For example, the second step reaction may be performed under natural cooling conditions. Preferably, the second step reaction may be performed using a temperature control device. In this case, rapid cooling is possible compared to natural cooling. Cooling temperature change and cooling time may vary depending on a reaction scale, temperature at the end of a reaction, ambient temperature, and the scale of a temperature control device, and it is preferable that cooling is performed under stirring.

For example, in the above-described first step, when 1 L of the electrolyte solution containing 1.6 mol vanadium, 4.0 mol sulfuric acid, and 20 M pre-solvent is reacted at room temperature using a 2 L flask and the reaction is completed at 110 °C, the natural cooling reaction of the second step may be performed for 4 to 7 hours. At this time, when a temperature control device for cooling is added, cooling time may be reduced depending on a cooling scale, and a production yield may be improved when using an appropriately sized cooling device.

In the third step, a post-solvent is added to the electrolyte solution obtained in the second step and filtration is performed. A slight amount of heat may be generated during the process of adding the post-solvent. When the post-solvent is mixed while maintaining room temperature by suppressing heat generated when the post-solvent is added using natural cooling or a temperature control device such as a cooler, dissolution of some of impurities that may be filtered using a filtration device in the electrolyte solution may be further suppressed.

The filtration may include gravity filtration using gravity, pressure filtration performed by pressurizing the upper layer of a filtration means, and vacuum filtration performed by depressurizing the lower layer of a filtration means. In addition, the filtration may be performed using a filtration means that is made of a hydrophilic material, has acid resistance, and has a pore size of 0.2 to 10 $\mu$m. In particular, when the pore size is less than 0.2 pm, due to increased process time or pressure load, quality may deteriorate. When the pore size exceeds 10 pm, the filtration effect may be insignificant.

When a filtration aid such as diatomaceous earth is used in combination with the filtration means, impurities are primarily removed by the filtration aid before a filtrate reaches the filtration means, thereby reducing a filtration load on the filtration means.

In this case, impurities that deteriorate the properties of an electrolyte solution may be filtered out through a physical filtration means without significantly affecting the overall process time. At the same time, the electrolyte solution may completely pass through the filtration means. Thus, a high-purity and high-quality vanadium electrolyte solution may be prepared.

The vanadium electrolyte solution may contain residual impurities of less than 30 ppm. Here, components included among the residual impurities may include Si and Al. The residual impurities content may preferably be 20 ppm or less. In this case, degradation of battery performance due to unnecessary impurities remaining in the vanadium electrolyte solution may be prevented.

The present invention provides a vanadium electrolyte solution prepared by the method of preparing a vanadium electrolyte solution.

The vanadium electrolyte solution may include a 2.0- to 5.0-valent vanadium compound, and at least a portion of the electrolyte solution may include a 3.3- to 3.7-valent vanadium compound.

The vanadium electrolyte solution prepared by the method of the present invention was evaluated at a current density of 100 mA/cm$^2$, a discharge cutoff voltage of 0.8 V, a charge cutoff voltage of 1.6 V, and a flow rate of 180 ml/min within the first 30 cycles.

In the present disclosure, charging capacity refers to the state in which charge is accumulated up to a charging cutoff voltage, discharging capacity refers to the state in which charge is emptied up to a discharging cutoff voltage, and energy efficiency means charging capacity multiplied by voltage efficiency compared to discharging capacity. The three factors may be provided as indicators to judge the lifespan and performance of an electrolyte solution.

The vanadium electrolyte solution may contain any compound that may provide vanadium ions used in a vanadium redox flow battery without particular limitation. This case applies to both a vanadium redox flow electrolyte aqueous solution and an electrolyte solution for non-aqueous vanadium redox flow such as vanadium acetylacetone.

In one embodiment of the present invention, the method of preparing a vanadium electrolyte solution will be described in more detail.

For example, in the method of preparing a vanadium electrolyte solution, when cooling the generated vanadium electrolyte solution before filtration, and controlling the cooling and filtration conditions, an optimized process in which a reaction rate is improved and the effect of reducing impurities is maximized may be provided.

Specifically, by using 5 to 15 mol of water per 1 mol of a vanadium compound in the above-described first step, generating a vanadium compound by performing a reaction at 100 °C or higher, adding water in a larger amount than the amount of water previously added, cooling a reduced vanadium compound to -25 to 20 °C, and then subjecting the reaction solution to circulation filtration at -25 to 40 °C, the reaction rate of the reduction reaction may be reduced.

In addition, by using 5 to 15 mol of water per 1 mol of a vanadium compound in the first step, generating a vanadium compound by performing a reaction at 100 °C or higher, cooling a reduced vanadium compound to -25 to 20 °C, adding water in a larger amount than the amount of water previously added, and then subjecting the reaction solution to circulation filtration at -25 to 40 °C, the reaction rate of the reduction reaction may be reduced.

For example, based on 100 % by weight in total of the vanadium compound, the reducing agent, sulfuric acid, and the solvent, the solvent may be included in an amount of 20 to 80 % by weight, preferably 30 to 70 % by weight. In this case, due to high concentration in a reaction tank, reaction efficiency may be excellent, and purity may be further increased.

As a specific example, unless a special pressure device is installed in a reactor, the reaction in the first step may be performed at 70 to 120 °C (corresponds to the first temperature), preferably 80 to 120 °C, more preferably 90 to 120 °C, still more preferably 100 to 110 °C. In this case, the reaction participation rate of the reactants may be further increased, and preparation may be performed within a relatively short time, thereby improving productivity.

For example, the reaction may be performed for 13 hours or less, preferably 1 to 13 hours, more preferably 2 to 8 hours. When the amount of the pre-solvent is greater than 6 times the mol number of vanadium and is close to 6 times, reaction time may be reduced, and the effect of removing impurities may be excellent. However, 6 times is a theoretical value, and when the actual amount of the pre-solvent is close to 6 times, it may not be easy to prepare an electrolyte solution due to slushing and solidification of the reactants, which varies depending on the characteristics of the vanadium raw material. Accordingly, it is desirable to add the pre-solvent in an amount of 8.0 times or more than the mol number of vanadium.

In addition, when the pre-solvent exceeds 15 times based on the mol number of vanadium, there is no advantage of adding a solvent in a split manner in two stages of the pre-solvent addition and the post-solvent addition. Accordingly, when the pre-solvent is used in the mol number range of 8 to 15 times the mol number of vanadium, the reaction participation rate of the reactants may be further increased, and preparation may be performed within a relatively short time, thereby improving productivity.

The reaction may preferably proceed under a nonreactive atmosphere such as nitrogen.

In addition, the reaction may be performed under atmospheric pressure, but pressurization or depressurization may be performed as needed within the range that satisfies the reaction conditions described above.

For example, based on 100 % by weight in total of the vanadium compound, the reducing agent, sulfuric acid, and the solvent, the solvent may be included in an amount of 20 to 80 % by weight, preferably 30 to 70 % by weight. In this case, due to high concentration in a reaction tank, reaction efficiency may be excellent, and purity may be further increased.

Then, the reduced vanadium compound formed in the first step is cooled to a temperature at least 80 °C lower than the first temperature.

For example, the cooling reaction may be performed under natural cooling conditions. Preferably, the cooling reaction may be performed using a temperature control device. In this case, rapid cooling is possible compared to natural cooling. Cooling temperature change and cooling time may vary depending on a reaction scale, temperature at the end of a reaction, ambient temperature, and the scale of a temperature control device, and it is preferable that cooling is performed under stirring.

For example, in the above-described first step, when 1 L of the electrolyte solution containing 1.6 mol vanadium, 4.0 mol sulfuric acid, and 20 M pre-solvent is reacted at room temperature using a 2 L flask and the reaction is completed at 110 °C, the cooling reaction may be performed at -25 to 20 °C (corresponds to the second temperature) for 4 to 7 hours. At this time, when a temperature control device for cooling is added, cooling time may be reduced depending on a cooling scale, and a production yield may be improved when using an appropriately sized cooling device.

The second temperature corresponds to the low temperature point (precipitation temperature) at which the vanadium electrolyte solution does not separate within 48 hours. The present invention was completed by confirming that the vanadium electrolyte solution does not separate, but impurities separate as temperature decreases. The second temperature is preferably -25 to 20 °C, more preferably -10 to 10 °C, still more preferably -5 to 5 °C. Most preferably, the second temperature is about 0 °C to implement the effect of reducing impurities compared to the cooling temperature.

Then, the obtained cooled electrolyte solution is filtered at a third temperature that is at least 40 °C lower than the first temperature.

The filtration may include gravity filtration using gravity, pressure filtration performed by pressurizing the upper layer of a filtration means, and vacuum filtration performed by depressurizing the lower layer of a filtration means. In addition, the filtration may be performed using a filtration means that is made of a hydrophilic material, has acid resistance, and has a pore size of 0.2 to 10 μm. In particular, when the pore size is less than 0.2 pm, due to increased process time or pressure load, quality may deteriorate. When the pore size exceeds 10 pm, the filtration effect may be insignificant.

When a filtration aid such as diatomaceous earth is used in combination with the filtration means, impurities are primarily removed by the filtration aid before a filtrate reaches the filtration means, thereby reducing a filtration load on the filtration means.

In this case, impurities that deteriorate the properties of an electrolyte solution may be filtered out through a physical filtration means without significantly affecting the overall process time. At the same time, the electrolyte solution may completely pass through the filtration means. Thus, a high-purity and high-quality vanadium electrolyte solution may be prepared.

The third temperature is preferably -25 to 40 °C, more preferably -10 to 30 °C, still more preferably -5 to 30 °C. Most preferably, the third temperature is about 0 °C to implement the effect of reducing impurities compared to the cooling temperature.

In the present invention, filtration is applicable to both circulating or non-circulating cases.

For example, in the non-circulating case, as in the above-described the second temperature, the third temperature is preferably -25 to 20 °C, more preferably -10 to 10 °C, still more preferably -5 to 5 °C. Most preferably, the third temperature is about 0 °C to implement the effect of reducing impurities compared to the cooling temperature.

However, in the case of circulation filtration, considering reaction efficiency, it is preferable that the third temperature is higher than in the non-circulating case. For example, as in the above-described the second temperature, the third temperature is preferably 20 to 40 °C, more preferably 25 to 35 °C, still more preferably 25 to 30 °C to implement the effect of reducing impurities.

A post-solvent may be added between the above-described first and second steps, or between the above-described second and third steps. A slight amount of heat may be generated during the process of adding the post-solvent. In this case, when the post-solvent is mixed while maintaining the third temperature by suppressing heat generated when the post-solvent is added using natural cooling or a temperature control device such as a cooler, by using a filtration device, dissolution of some filterable impurities into the electrolyte solution may be further suppressed.

The vanadium electrolyte solution may contain residual impurities of 30 ppm or less. Here, components included among the residual impurities may include Si, Al, Ca, and Fe. The residual impurities content may preferably be 20 ppm or less. In this case, degradation of battery performance due to unnecessary impurities remaining in the vanadium electrolyte solution may be prevented.

As shown in the example described later, when -25 to 20 °C was applied as the second temperature during circulation filtration, the post-solvent was added, and 20 to 40 °C was applied as the third temperature, impurities of 20 ppm or less containing 4.6 ppm of Al, 8.2 ppm of Ca, 3.3 ppm of Fe, and 4.0 ppm of Si were confirmed.

In addition, when the post-solvent was added during circulation filtration, -25 to 20 °C was applied as the second temperature, and then -25 to 20 °C was applied as the third temperature, impurities of 15 ppm or less containing 2.1 ppm of Al, 7.4 ppm of Ca, 2.5 ppm of Fe, and 2.2 ppm of Si were confirmed. In particular, Al and Si were significantly reduced.

In addition, when the post-solvent was added without circulation, -25 to 20 °C was applied as the second temperature, and then 20 to 40 °C was applied as the third temperature, impurities of greater than 20 ppm containing 4.5 ppm of Al, 9.9 ppm of Ca, 8.8 ppm of Fe, and 4.1 ppm of Si were confirmed.

In addition, when -25 to 20 °C was applied as the second temperature without circulation, the post-solvent was added, and then -25 to 20 °C was applied as the third temperature, impurities of 20 ppm or less containing 2.3 ppm of Al, 7.4 ppm of Ca, 6.2 ppm of Fe, and 2.4 ppm of Si were confirmed. In particular, Al and Si were significantly reduced.

In addition, when the post-solvent was added without circulation, -25 to 20 °C was applied as the second temperature, and then -25 to 20 °C was applied as the third temperature, impurities of 20 ppm or less containing 2.2 ppm of Al, 7.3 ppm of Ca, 7.3 ppm of Fe, and 1.8 ppm of Si were confirmed. In particular, Al and Si were significantly reduced.

For example, in the present invention, the circulation filtration includes an electrolyte solution discharge pipe connected to the electrolyte solution outlet of a vanadium electrolyte solution preparation device and optionally, a circulation pipe extending from one side of the discharge pipe and connecting to the upper part of a reaction tank, and a filtration device may be installed in the electrolyte solution discharge pipe or the circulation pipe. In this case, since a filtration step is naturally inserted within a single process, a high-purity and high-quality electrolyte solution may be prepared without excessively increasing process time.

For example, in the present invention, the apparatus for preparing a vanadium electrolyte solution includes a single reaction tank, a raw material inlet for injecting reaction raw materials into the single reaction tank, an electrolyte solution outlet for discharging the prepared vanadium electrolyte solution, a stirrer for stirring the input reaction raw materials, an open reflux condenser connected to an upper portion of the single reaction tank to cool and recover water vaporized during reaction and discharge nitrogen gas, and a temperature control device for controlling reaction temperature. In this case, manufacturing cost may be reduced, process may be simplified, facility investment cost may be reduced, maintenance and management may be easy, and massive production may be possible using a non-catalytic chemical reaction process. In addition, by applying predetermined reaction conditions, reaction time may be reduced, reaction efficiency may be maximized, and a high-quality electrolyte solution may be prepared.

Preferably, the interior of the reaction tank may be coated with one or more selected from the group consisting of glass, PE, and Teflon resin, more preferably one or more selected from the group consisting of PE and Teflon resin, most preferably Teflon resin. In this case, maintenance and management of the reactor may be easy, and reaction efficiency may be excellent.

In the apparatus for preparing a vanadium electrolyte solution, preferably, a filtration device may be installed on the electrolyte solution discharge pipe. More preferably, in addition to the electrolyte solution discharge pipe, a filtration device may be installed in all circulation pipes as needed. In this case, by naturally inserting a filtration step within a single process, a high-purity and high-quality electrolyte solution may be prepared without excessively increasing process time.

Preferably, one or more filtration devices may be installed on the circulation pipe. More preferably, one or two filtration devices may be installed on the circulation pipe. Still more preferably, one filtration device may be installed on the circulation pipe. In this case, by naturally inserting a filtration step within a single process, a high-purity and high-quality electrolyte solution may be prepared without excessively increasing process time.

Preferably, one or more filtration devices may be installed on the discharge pipe. More preferably, one to three filtration devices may be installed on the discharge pipe. Still more preferably, one or two filtration devices may be installed on the discharge pipe. Within this range, by naturally inserting a filtration step within a single process, a high-purity and high-quality electrolyte solution may be prepared without excessively increasing process time.

Preferably, two or more filtration devices may be installed on the device for preparing a vanadium electrolyte solution. More preferably, two or three filtration devices may be installed on the device. Still more preferably, two filtration devices may be installed on the device. Within this range, by naturally inserting a filtration step within a single process, a high-purity and high-quality electrolyte solution may be prepared without excessively increasing process time.

The temperature control device is preferably a heat exchanger, more preferably a jacket-type heat exchanger. In this case, since reaction temperature is easily controlled, reaction efficiency may be excellent, and a high-purity and high-quality vanadium electrolyte solution may be prepared.

In the present disclosure, jacket-type heat exchangers commonly used in the art to which the present invention pertains may be used as the jacket-type heat exchanger of the present invention without particular limitation. For example, the jacket-type heat exchanger may be a jacket that surrounds the reaction tank and includes a heat transfer medium.

In the present invention, an apparatus configuration and process flowchart for preparation of an electrolyte solution through circulation filtration are shown in FIG. 16 below. Referring to FIG. 16, hydrazine monohydrate ($N_2H_4 \cdot H_2O$), a vanadium compound ($V_2O_5$), sulfuric acid ($H_2SO_4$), and deionized water (DIW) are fed into a single reaction tank through a raw material inlet, and a first reduction reaction is performed while stirring the fed reaction raw materials using a stirrer. When the first reduction reaction is completed, the reactant is passed through a circulation pipe equipped with a filtration means to remove impurities. Then, a second reduction reaction proceeds by heating the reactant using a jacket-type heat exchanger (heater) surrounding the reaction tank. Water vapor generated during the reduction reaction and water vapor contained in nitrogen gas ($N_2$) are cooled using an open reflux condenser and returned to the reactor, and nitrogen gas ($N_2$) is discharged to the outside through an open reflux condenser. After the second reduction reaction is completed, impurities are removed once more through a discharge pipe equipped with a filtration means, and a final electrolyte solution product ($V^{3.5+}$ electrolyte product) is obtained.

As described above, unlike the existing vanadium electrolyte solution preparation apparatus and process, the vanadium electrolyte solution preparation apparatus and process according to the present invention may prepare a 3.5-valent electrolyte solution using one reactor. In addition, compared to the existing apparatus and process, the present invention is advantageous in terms of process apparatus and maintenance.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

**[Examples]**

Example 1

The composition of a vanadium electrolyte solution of Example 1 is 1.6 mol of a vanadium compound and 4.0 mol of sulfuric acid. The ionic value of the vanadium electrolyte solution is 3.5-valence, and the vanadium electrolyte solution is a vanadium electrolyte solution in which tetravalent vanadium ions and vanadium trivalent ions are mixed in a molar ratio of 1:1.

Materials needed to prepare the electrolyte solution of Example 1 are as follows:
146 g of a low-quality vanadium compound (99 % purity), 400 g of a 98 % sulfuric acid solution, 775 g of water, 38.0 g of an aqueous solution (80 wt%) of a nitrogen-based reducing agent (hydrazine monohydrate), and 0.15 g of a redox additive (molybdenum trioxide)

Here, hydrazine monohydrate is needed in a mol number corresponding to a value obtained by multiplying the mol number of vanadium by 0.375, and about 0.6 M hydrazine monohydrate is needed for 1.6 mol of the vanadium compound. As hydrazine, 80 % by weight of an aqueous hydrazine monohydrate solution was used. As the redox additive, molybdenum trioxide was used.

In the present disclosure, M refers to the mol number (mol/L) of a solute dissolved in 1 L of a solution. In the present disclosure, unless otherwise defined, % means % by weight.

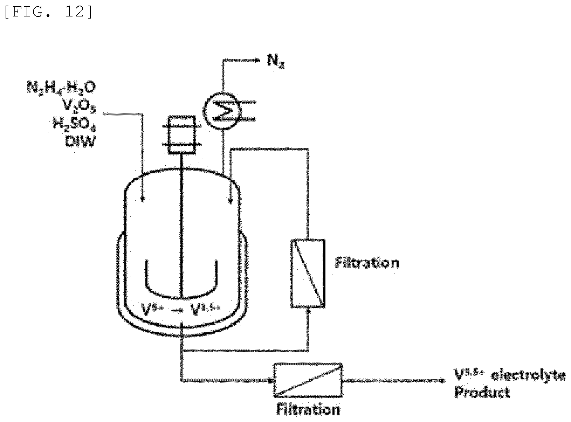

Referring to FIG. 12, the apparatus required to prepare the electrolyte solution of Example 1 is configured as follows.

The apparatus consists of a reaction tank capable of reacting more than 1 L (hereinafter also referred to as a "reactor"), a stirrer, a heater having a temperature control function, a thermometer, and a filtration system (pump, tube, filter, etc.). In the apparatus, a surface in contact with the electrolyte solution must be made of a material having acid resistance and chemical resistance, such as glass, PTFE, PE, and Teflon.

A vanadium compound ($V_2O_5$), sulfuric acid ($H_2SO_4$), deionized water (DIW), and hydrazine monohydrate ($N_2H_4 \cdot H_2O$) were fed into the reaction tank through a raw material inlet, and first reduction reaction was performed while stirring the fed reaction raw materials using a stirrer.

When the first reduction reaction was completed, impurities were removed by passing the reactant through a circulation pipe equipped with a filtration means. Then, molybdenum trioxide ($MoO_3$) was fed into the reactor, and then second reduction reaction was performed by heating the reactant using a jacket-type heat exchanger (heater) surrounding the reaction tank.

Water vapor and water vapor contained in nitrogen gas generated during the reduction reaction were cooled and recovered into the reactor, and the nitrogen gas was discharged to the outside. When the second reduction reaction was completed, impurities were removed again through a discharge pipe equipped with a filtration means, and a final electrolyte solution product ($V^{3.5+}$ electrolyte product) was obtained.

Hereinafter, the electrolyte solution preparation steps of Example 1 will be described in detail step by step.

**<Example 1: 3-Step preparation process experiment>**

**Step 1: Adding vanadium raw material and nitrogen-based reducing agent**

In Step 1, although the input flow rate of raw materials is not greatly considered, the order of input of raw materials needs to be considered.

The most preferred way to add raw materials to a reaction tank (reactor) is in the following order: water → vanadium → hydrazine monohydrate under operation of a stirrer. In this process, water may be added in a split manner. For example, after diluting hydrazine monohydrate by mixing hydrazine monohydrate with a portion of water, the diluted hydrazine monohydrate may be added. In addition, a method of adding water and a vanadium compound and then flowing the vanadium compound attached to the inside of the raw material inlet into the reactor with water may be used. However, when there is water in the reactor before adding the vanadium compound, it may be slightly more advantageous for dispersion of the vanadium compound within the reactor. When water is added after adding the vanadium compound, the vanadium compound may easily become isolated between the bottom of the reactor and the vanadium compound-water interface. The isolated and aggregated vanadium compound may create unnecessary loads.

The most undesirable mixing method in Step 1 is to directly mix the vanadium compound and hydrazine monohydrate. When an electrolyte solution is prepared by mixing the vanadium compound and hydrazine monohydrate, adding water, and then adding sulfuric acid in Step 2 described later, a portion of the vanadium compound, which is a raw material, does not dissolve in sulfuric acid and precipitates. When the two raw materials are mixed without water, a violent reaction occurs, generating smoke and heat, and the vanadium compound turns black.

Inferring based on this phenomenon, it is presumed that some of the hydrazine compound is decomposed by instantaneous reaction heat and cannot function as a reducing agent after sulfuric acid is added, resulting in precipitation of the vanadium compound. At this step, 25.2 g of hydrazine monohydrate was first added out of a total of 38.0 g. During this input process, the temperature inside the reactor may increase slightly to within 10 °C.

## Step 2: Adding sulfuric acid

In Step 2, the flow rate of sulfuric acid to be added to the reaction solution mixed in Step 1 may be determined considering heat generation. It is advisable to add sulfuric acid slowly to prevent the reaction solution from splashing on the walls of the container as much as possible. At this time, it is desirable that the heating temperature does not exceed 110 °C. In this process, a gas exhaust and collection device such as an open reflux condenser is required, and a cooling device or a heating device such as a heater (heat exchanger) may be additionally required.

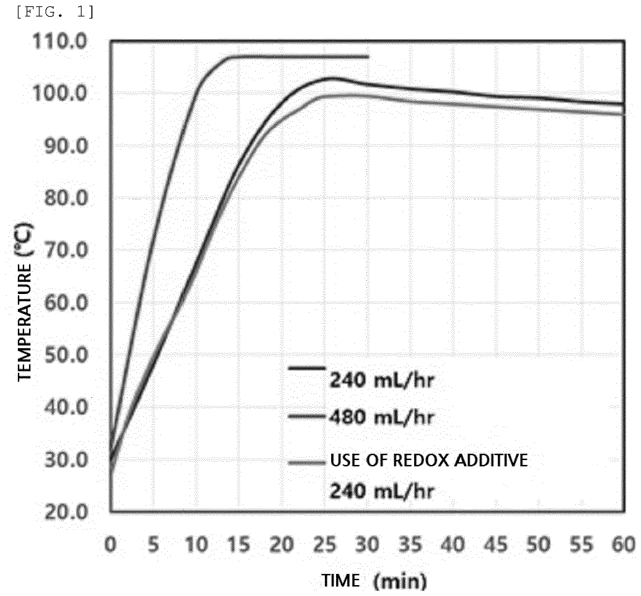

FIG. 1 below a graph showing temperature change over time when a reduction reaction using a reducing agent is performed at a sulfuric acid flow rate of 240 ml/hr or 480 ml/hr.

Referring to FIG. 1 below, at the first half of introduction of sulfuric acid, a temperature increase shows a steep slope, but a temperature drop is observed at approximately 25 minutes at a flow rate of 240 ml/hr and at approximately 13 minutes at a flow rate of 480 ml/hr, respectively. The temperature increase in the first half is caused by heat generated in the process in which 1.6 M vanadium is dissolved in 1.6 M (approximately 100 ml) sulfuric acid and reduced to pentavalent vanadium ions, and the reduced pentavalent vanadium ions are changed into tetravalent ions by hydrazine monohydrate. On the other hand, after a certain point, in the case of 240 ml/hr, the temperature decreases slightly, and in the case of 480 ml/hr, the temperature is maintained. Accordingly, it is advisable to design sulfuric acid flow rate control considering the reactor size, reactant amount and composition, and reaction point.

In this example, in the first half, the redox reaction was performed at 200 to 300 ml/h, preferably 220 to 260 ml/h, more preferably 235 to 245 ml/h, and in the second half, the redox reaction was performed at 430 to 530 ml/h, preferably 460 to 500 ml, more preferably 475 to 485 ml/h. The flow rate in this example is a range value in the experimental conditions of equipment for implementing this example, and it would be most desirable when flow rate control in two sections is performed under target temperatures.

The Step 1-Step 2 process performed in this example (water → vanadium compound → hydrazine monohydrate → sulfuric acid, hereinafter referred to as "flow rate example") has two advantages compared to a method (hereinafter referred to as "flow rate comparative example") of adding components in the order of water → vanadium compound → sulfuric acid → hydrazine monohydrate.

The above two advantages include reduced reaction time and high reduction efficiency of a reducing agent.

When, as in the flow rate comparative example, sulfuric acid is added to water + vanadium compound prior to hydrazine monohydrate at a rate of 240 ml/hr over 50 to 70 minutes, specifically, 60 minutes, the temperature is increased from 26 °C to 81 °C. Next, when 25.2 g of hydrazine monohydrate is diluted in 100 g of water and injected at an inflow rate of 250 ml/hr, it takes about 30 minutes, and the final temperature is 105 °C. Here, it is preferable that 20 to 30 parts by weight of hydrazine monohydrate is diluted in 100 parts by weight of water and the diluted hydrazine monohydrate is used.

Hydrazine has reducing power to instantly reduce pentavalent ions to tetravalent ions even at room temperature. Additionally, considering that the boiling point of hydrazine is 114 °C, addition of hydrazine at high temperature is not suitable for process control even when diluted in water. In addition, it increases the possibility of loss of hydrazine, making it difficult to have a positive effect on quality. For reference, when input at high temperature is necessary, a method of mixing the diluted hydrazine raw material through flow rate control may be used, as shown in the flow rate comparative example.

On the other hand, when hydrazine monohydrate is added first and sulfuric acid is added later, since reduction of hydrazine begins at a low temperature, there are relatively few side effects due to temperature increase and the overall process time may be reduced. That is, when the input order of the flow rate example is used, a flow rate control raw material is one type of sulfuric acid. On the other hand, when the input order of the flow rate comparative example is used, since there are two types of flow rate control raw materials, there may be difficulties in process time or processing.

Apart from the boiling point of 114 °C, hydrazine decomposes into $NH_3$ + NH when the temperature exceeds 180 °C and into $N_2$ + $2H_2$ when the temperature exceeds 350 °C. When hydrazine monohydrate is added at high temperatures, there is a high possibility that hydrazine will decompose without acting as a reducing agent due to heat generated locally. In theory, a normal reaction may be possible if there is no loss of gaseous hydrazine at temperatures above 114 °C, but in the actual process, loss may easily occur. Due to these side reactions and loss, experimentally, about 4 to 7% more content than the stoichiometric ratio must be added to achieve 3.5-valence in the flow rate comparative example. On the other hand, in the flow rate example, it is sufficient to consume a content of about 0 to 3 %, so the flow rate example is extremely superior in terms of loss and side reactions compared to the flow rate comparative example.

The end point of Step 2 may be when sulfuric acid addition is completed, or additional stirring may be performed within 2 hours at 110 °C or less.

In Step 2, when gas by-product ($N_2$) from the reduction process of pentavalent vanadium ions is discharged out of the container, and the vaporized $H_2O$ and $H_2SO_4$ are condensed and cooled to stay in the reactor to maintain high temperature (about 110 °C), reaction efficiency may be maximized and changes in composition within the reactor may be prevented.

### Step 3: Preparing 3.5-valent electrolyte solution

Next, 0.15 g of molybdenum trioxide (0.1 parts by weight based on 100 parts by weight of $V_2O_5$) as a redox additive was added to the reactor, and the reactor temperature was adjusted to 110 °C using a heater or a heat exchanger.

Then, the remaining amount of hydrazine monohydrate (12.8 g) was added to the reactor. Hydrazine monohydrate may be added even when the reactor temperature does not reach 110 °C. However, when hydrazine monohydrate is added to the tetravalent electrolyte solution at a temperature of 80 °C or less, especially 60 °C or less, sulfuric acid-hydrazine salt may be formed, and the reducing function of hydrazine may be reduced.

In Step 3, when gas by-products ($N_2$) from the reduction process of tetravalent vanadium ions are discharged out of the container, and the vaporized $H_2O$ and $H_2SO_4$ are condensed and cooled to stay in the reactor to maintain high temperature (about 110 °C), reaction efficiency may be maximized and changes in composition within the reactor may be prevented. The time required for Step 3 process is less than 12 hours.

Division of Example 1 into three stages is for illustration purposes only. Overall, Example 1 is a single process conducted within the same reactor. In this example, the redox additive is added in Step 3, but the redox additive may be added when vanadium is added in Step 1 before hydrazine to sulfuric acid is added.

In FIG. 1, the influence of redox additive on the sulfuric acid flow rate is displayed, and there is no significant difference depending on the presence or absence of the redox additive at a flow rate of 240 ml/hr. This means that the reducing power of hydrazine for pentavalent vanadium is so strong that the redox additive does not perform a role as a catalyst, or does not have a significant level of influence even when the redox additive performs. The redox additive may be added in Step 3 described above, but the present invention is not limited thereto, and the redox additive may also be added in Step 1 or Step 2.

### <Examples 2 to 5: Redox additive content change experiment>

The same experiment as in Example 1 was performed except that 0.15 g of molybdenum trioxide (0.1 parts by weight based on 100 parts by weight of $V_2O_5$) used in Example 1 was changed to 0.30 g (0.2 parts by weight: Example 2), 0.60 g (0.4 parts by weight: Example 3), 1.2 g (0.8 parts by weight: Example 4), and 2.4 g (1.6 parts by weight: Example 5).

### <Example 6: Preparation process using high-quality raw material>

The same experiment as in Example 4 was performed except that the low-quality vanadium compound (purity: 99 %) used in Step 1 of Example 4 was replaced with a high-quality vanadium compound (purity: 99.9 %).

### <Comparative Example 1: Redox additive free-electrolysis preparation process>

The materials needed to prepare a tetravalent vanadium electrolyte solution for electrolysis in Comparative Example 1 are as follows:

146 g of a vanadium compound, 400 g of 98 % sulfuric acid, 775 g of water, and 72.0 g of oxalic acid anhydride (organic reducing agent replacing nitrogen-based reducing agent)

The vanadium compound, oxalic acid anhydride, and water were fed into a reactor, and as described in Example 1, sulfuric acid was added thereto in consideration of heat generation.

From the time addition of sulfuric acid was completed, additional stirring was performed at 105 °C for approximately 3 hours. When the reduction reaction was completed, impurities were removed through a discharge pipe equipped with a filtration means, and approximately 1 L of an electrolyte solution product ($V^{4+}$ electrolyte product) to be subject to electrolysis was obtained.

330 ml of the obtained tetravalent vanadium compound was added to a positive electrode tank and a negative electrode tank, respectively, and electrolysis was performed while leaving the remaining 330 ml of the tetravalent vanadium compound. Electrolysis was performed in a constant current mode at 150 mA/cm$^2$ to reach a voltage of 1.8V, and 300 ml or more of the pentavalent vanadium compound was obtained from the positive electrode tank.

300 ml of a pentavalent vanadium compound obtained by electrolysis and 300 ml of 330 ml of the tetravalent vanadium compound remaining without electrolysis were combined to finally obtain 600 ml of a 3.5-valent vanadium electrolyte solution. Then, impurities were removed again using the filtration means. When the oxidation number deviates slightly during this process, the oxidation number may be adjusted with the remaining amount.

**<Comparative Example 2: Use of excess amount of redox additive>**

The same experiment as in Example 1 was performed except that 0.29 g of molybdenum trioxide (0.2 parts by weight based on 100 parts by weight of $V_2O_5$) used in Example 1 was changed to 15 g (10 parts by weight).

**<Test Example 1: Evaluation of battery performance>**

The performance of each of the electrolyte solutions prepared in Examples 1 to 6 and Comparative Examples 1 and 2 was evaluated by the following method.

Constant current charging was performed with a current of 100 mA/cm$^2$ until voltage reached 1.60 V, and then discharging was performed with a reverse constant current of 100 mA/cm$^2$ until the voltage reached 0.8 V. After repeating the above cycle 30 times, the results are summarized and shown in Table 1 below.

In Table 1 below, the redox additive content represents the weight (parts by weight) of $MoO_3$ based on 100 parts by weight of $V_2O_5$, the reaction time is time taken from the time addition of sulfuric acid was completed to the time when the reaction was judged to be complete as there was little change in the oxidation number, charging capacity, discharging capacity, and energy efficiency are each the value of the 30th cycle, and the content (ppm) represents the content of Mo, the main component of redox additive $MoO_3$ in the electrolyte solution.

[Table 1]

| Classifica tion | Examp le 1 | Examp le 2 | Examp le 3 | Examp le 4 | Examp le 5 | Examp le 6 | Comparat ive Example 1 | Comparat ive Example 2 |
|---|---|---|---|---|---|---|---|---|
| Redox additive (parts by weight) | 0.1 | 0.2 | 0.4 | 0.8 | 1.6 | 0.8 | - | 10 |
| Raw material purity | Low quali ty | Low quali ty | Low quali ty | Low quali ty | Low quali ty | High quali ty | Low quality | Low quality |
| Reaction time (hr) | 12 | 10 | 8 | 6.5 | 5.5 | 6.5 | - | 1.5 |
| Final oxidation number | 3.503 | 3.498 | 3.500 | 3.501 | 3.500 | 3.499 | 3.501 | 3.501 |
| Charging capacity (Ah) | 2.30 | 2.31 | 2.24 | 2.31 | 2.16 | 2.34 | 2.16 | 1.71 |
| Dischargin g capacity (Ah) | 2.22 | 2.22 | 2.15 | 2.21 | 2.08 | 2.25 | 2.08 | 1.64 |
| Energy efficiency (%) | 80.72 | 81.08 | 80.74 | 80.57 | 78.55 | 80.72 | 79.56 | 79.81 |
| Content (ppm) | 71.0 | 134.2 | 271.6 | 538.5 | 1118. 4 | 532.2 | - | 5974.2 |

As shown in Table 1 and FIG. 3 below, it was confirmed that the input amount of the redox additive did not affect the final oxidation number during preparation of an electrolyte solution, and only affected reaction rate without being involved in the reduction amount.

As shown in Table 1 and FIG. 2 below, it was confirmed that the time required for the reduction reaction showed a proportional negative correlation with the redox additive content as in the above-described Equation 1-1.

As shown in Examples 4 and 6 in Table 1, it can be seen that the performance difference between the electrolyte solution prepared using a low-quality vanadium compound and the electrolyte solution prepared using a high-quality vanadium compound is minimal.

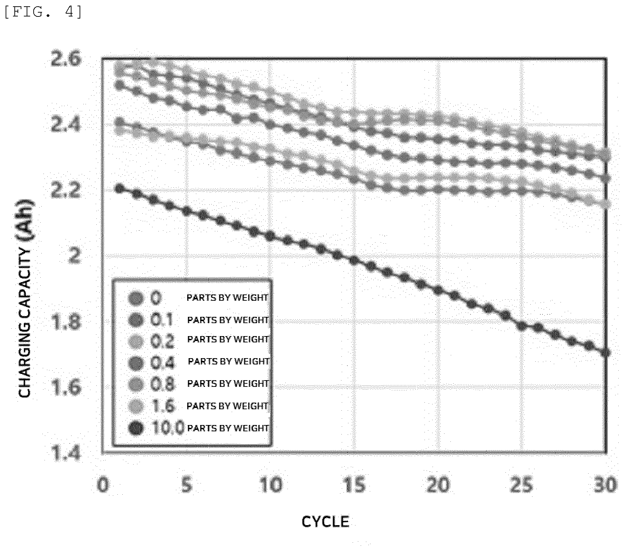

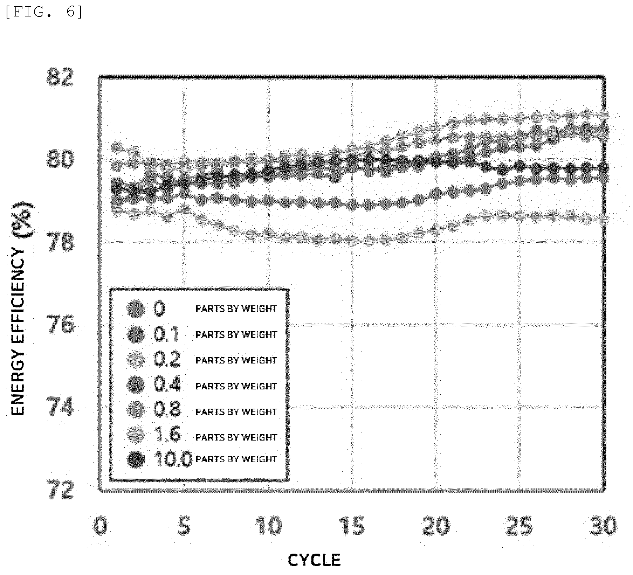

As shown in Examples 1 to 6 and Comparative Example 1 in Table 1, it can be confirmed that the performance of the electrolyte solution prepared according to the process of the present invention is superior to that of the electrolyte solution prepared through electrolysis. This fact was confirmed in FIGS. 4 to 6.

As shown in Example 5 and Comparative Example 2 in Table 1, it can be confirmed that, when an excessive amount of the redox additive is added, the reaction rate is slightly improved, but the performance of the electrolyte solution is reduced. According to these examples, it can be confirmed that the redox additive has excellent performance degradation at the level of 10 parts by weight, and this is confirmed in FIGS. 4 to 6.

As shown in Table 1, in terms of energy efficiency, it was confirmed that change according to the input amount of the redox additive was relatively small, including the results of Comparative Example 1.

### <Test Example 2 : Equation 1 confirmation test for Examples 1 to 6>

In the present disclosure, Equation 1 may be specified as Equation 1-1 below by substituting the values of Examples 1 to 6.

$$[\text{Equation 1-1}] \quad t_R = -2.233\ln(Ma/Mv) - 3.8086,$$

$$(R^2=0.9925)$$

Equation 1-1 shows that the relationship between the redox additive and the reaction rate in Example 1 is a proportional negative correlation and follows the Arrhenius equation, which was confirmed in FIG. 2. That is, using Equation 1-1, the process time may be controlled by determining the amount of the redox additive from the variables of raw materials, compositions, and process conditions.

### <Test Example 3: Combination test of redox additive and other additives>

In Test Example 3, $H_3PO_4$, which is known to be added to ensure the temperature stability of an electrolyte solution, was added and the mutual influence of $H_3PO_4$ and the redox additive was confirmed.

Specifically, an electrolyte solution sample using a redox additive was prepared in the same manner as in Example 3, and then electrolyzed to prepare the pentavalent electrolyte solution of Reference Examples 1a to 4a.

By preparing an electrolyte solution sample in the same manner as in Comparative Example 1, pentavalent electrolyte solutions of Reference Examples 1b to 4b were prepared.

The separation process of vanadium ions was observed at 50 °C for the eight electrolyte solutions of Reference Examples 1a to 4b, and the results are shown in Table 2 below.

[Table 2]

| Classifi cation | Refer ence Examp le 1a | Referen ce Example 1b | Refer ence Examp le 2a | Referen ce Example 2b | Refer ence Examp le 3a | Referen ce Example 3b | Refer ence Examp le 4a | Referen ce Example 4b |
|---|---|---|---|---|---|---|---|---|
| Additive | $H_3PO_4$ | $H_3PO_4$ | $H_3PO_4$ | $H_3PO_4$ | $H_3PO_4$ | $H_3PO_4$ | $H_3PO_4$ | $H_3PO_4$ |
| Amount of additive compared to $V_2O_5$ | 3 parts by weigh t | 3 parts by weight | 6 parts by weigh t | 6 parts by weight | 9 parts by weigh t | 9 parts by weight | 12 parts by weigh t | 12 parts by weight |
| Oxidatio n number | 3.501 | 3.500 | 3.500 | 3.502 | 3.501 | 3.499 | 3.499 | 3.500 |
| Amount of redox additive | 0.4 parts by weigh t | Electro lysis | 0.4 parts by weigh t | Electro lysis | 0.4 parts by weigh t | Electro lysis | 0.4 parts by weigh t | Electro lysis |
| Reaction time | 8 h | Electro lysis | 8 h | Electro lysis | 8 h | Electro lysis | 8 h | Electro lysis |
| Separati on time of pentaval ent ions (50 °C) | ~ 110 h | ~ 110 h | ~ 180 h | ~ 180 h | ~ 250 h | ~ 250 h | ~ 320 h | ~ 320 h |

As shown in Reference Examples 1a to 4b in Table 2, it can be seen that the redox additive and the $H_3PO_4$

additive do not affect each other. This interrelationship is not limited to the $H_3PO_4$ additive.

### <Example 2>

The vanadium electrolyte solution of Example 2 below includes 1.7 mol of a vanadium compound and 4.3 mol of sulfuric acid, and has an electrolyte solution density of 1.35 g/cm$^3$. The ionic value of the vanadium electrolyte solution is 3.5, and the vanadium electrolyte solution is an electrolyte solution containing tetravalent vanadium ions and vanadium trivalent ions in a ratio of 1:1.

Materials needed to prepare the electrolyte solution of Example 2 are as follows:
154.5 g of a vanadium compound having a purity of 99.5 %, 432 g of 98 % sulfuric acid, A g of deionized water (DIW) for a pre-solvent, (720-A) g of deionized water (DIW) for a post-solvent, and 40.4 g of an aqueous hydrazine monohydrate solution (80 % by weight) (Here, A refers to the description of Examples 7 to 9 and Comparative Examples 3 and 4 described later)

The configuration of the apparatus needed to prepare the electrolyte solution of Example 2 is as follows.

The apparatus consists of a reaction tank (hereinafter referred to as "reactor") capable of reacting 1 L or more of reactants, a stirrer, a heater having a temperature control function, a thermometer, reflux, and a filtration system (pump, tube, filter, etc.). In the apparatus, a surface in contact with the electrolyte solution must be made of a material having acid resistance and chemical resistance, such as glass, PTFE, PE, and Teflon.

The vanadium compound ($V_2O_5$), the pre-solvent, and hydrazine monohydrate ($N_2H_4 \cdot H_2O$) were fed into the reaction tank through a raw material inlet, and then sulfuric acid ($H_2O$) was fed thereto.

In the process of adding sulfuric acid, the first step reaction was performed while maintaining reaction temperature at 110 °C by heating the reactant using a jacket-type heat exchanger (heater) surrounding the reaction tank.

After the first step reaction was completed, cooling was performed, water vapor generated during the reduction reaction and water vapor in nitrogen gas ($N_2$) were recovered into the reactor, and nitrogen gas ($N_2$) was discharged to the outside.

Next, the post-solvent was added, temperature was adjusted to room temperature, and impurities were removed through a discharge pipe equipped with a filtration means to obtain a final electrolyte solution product ($V^{3.5+}$ electrolyte product).

In Example 7, 540 g (about 75 %) of the pre-solvent A is used in the total solvent, and the amount of the post-solvent is 180 g. When converted to mol number, the pre-solvent is 30 M, and the post-solvent is 10 M. Here, the pre-solvent is about 3.2 times excessive compared to the minimum required water of 9.35 M compared to 1.7 M of vanadium, and is an amount corresponding to a mol number that is 17.6 times greater than vanadium 1.7 M.

Hereinafter, the steps of preparing the electrolyte solution of Example 7 are described in detail.

### <Example 7>

The first step reaction presented in the preparation example was performed.

### Adding vanadium compound and pre-solvent

First, deionized water (DIW) and a vanadium compound ($V_2O_5$) were added to a reactor under operation of a stirrer. At this time, 440 g of 540 g of a pre-solvent was added.

### Adding hydrazine compound

Next, 40.4 g of hydrazine monohydrate ($N_2H_4 \cdot H_2O$) was mixed with the remaining 100 g of the pre-solvent and then added to the reactor. During the input process, the temperature inside the reactor may increase within 10 °C.

### Adding sulfuric acid

In the above-described step, sulfuric acid was added at a sulfuric acid input flow rate considering heat generation.

Specifically, sulfuric acid was added slowly and the flow rate was adjusted to prevent the reaction solution from splashing on the wall of the vessel as much as possible, and the heating temperature within the reactor was ensured not to exceed 110 °C.

Here, reflux expelled gas by-products ($N_2$) generated during reduction process of pentavalent vanadium ions out of the container, and condensed and cooled vaporized $H_2O$ and $H_2SO_4$ so that the $H_2O$ and $H_2SO_4$ remained in the reactor to maintain a high temperature of around 110 °C and prevent composition change inside the reactor.

**Reducing**

Reduction was performed while maintaining the reactor temperature at 110 °C using a heater or a heat exchanger. The progress of reduction was confirmed by collecting a portion (0.5 ml or less) of the reactant, diluting the portion, and performing UV measurement.

Here, reflux expelled gas by-products ($N_2$) generated during reduction process of pentavalent vanadium ions out of the container, and condensed and cooled vaporized $H_2O$ and $H_2SO_4$ so that the $H_2O$ and $H_2SO_4$ remained in the reactor to maintain a high temperature of around 110 °C and prevent composition change inside the reactor.

**Cooling**

When the reduction reaction was completed, the heater or heat exchanger was stopped, and cooling was performed to room temperature using a cooler.

**Adding post-solvent and performing filtration**

180 g of the post-solvent was added to the reactor and stirred with the cooled electrolyte solution described above. During this process, some heat was generated. At this time, the temperature was reduced to room temperature through cooling. Then, impurities were removed again through a discharge pipe equipped with a filtration means, and a final electrolyte solution product ($V^{3.5+}$ electrolyte product) was obtained.

**<Example 8: Change (1) in input amount of pre-solvent/post-solvent>**

In Example 8, the same process as in Example 7 was performed except that the input amount of the pre-solvent/post-solvent in Example 7 was changed.

Specifically, 360 g of the pre-solvent A of Example 7 and 360 g of the post-solvent were used. That is, an amount equivalent to about 50 % of the total solvent was used. This corresponds to a water content of about 2.1 times the minimum pre-solvent content and is an amount corresponding to 11.8 times 1.7 mol of vanadium.

**<Example 9: Change (2) in input amount of pre-solvent/post-solvent>**

In Example 9, the same process as in Example 7 was performed except that the input amount of the pre-solvent/post-solvent in Example 7 was changed.

Specifically, 180 g of the pre-solvent A of Example 7 and 540 g of the post-solvent were used. That is, of the total solvent, an amount equivalent to approximately 25 % was used as the pre-solvent and an amount equivalent to 75 % was used as the post-solvent. This corresponds to a water content of about 1.1 times the minimum pre-solvent content and is an amount corresponding to 5.9 times 1.7 mol of vanadium.

**<Comparative Example 3: No post-solvent used>**

To compare with the examples, in Comparative Example 3, the same process as in Example 7 was performed except that a total amount (720 g) of the pre-solvent and the post-solvent was added during the pre-solvent input step of Example 7, and the pre-solvent and the post-solvent were not added in the post-solvent input step. In Table 2, the amounts of the pre-solvent/post-solvent used in Examples 7 to 9 and Comparative Example 3 are shown.

**<Comparative Example 4: Change (3) in input amount of pre-solvent/post-solvent>**

In Comparative Example 4, the same process as in Example 7 was performed except than the input amount of the pre-solvent/post-solvent was changed. Specifically, Comparative Example 4 is an experiment using 95 g (3.1 times mol compared to 1.7 mol of vanadium) of the pre-solvent described in the present invention.

**<Test Example 3>**

The performance of the electrolyte solutions and secondary batteries prepared in Examples 7 to 9 and Comparative Example 3 was evaluated by the following methods.

[Measurement of oxidation number]

The oxidation number of vanadium was measured at each reaction stage in the electrolyte solution preparation process using a UV spectrometer, and reaction time is shown in Table 3 below.

[Measurement of impurities]

The contents of impurities (Si and Al) in the electrolyte solution were measured using an ICP-OES device, and the results are shown in Table 2 below.

[Evaluation of battery capacity (Ah) and energy efficiency (%)]

The secondary battery was charged with a constant current of 100 mA/cm$^2$ at room temperature until the voltage reached 1.60 V, and then discharged with a reverse constant current of 100 mA/cm$^2$ until the voltage reached 0.8 V. The above cycle was repeated 30 times, the average value was calculated, and the results are shown in Table 3 below.

[Table 3]

| Classification | Solvent ratio (Before:After) | Reaction time (hr) | Impurity Si (ppm) | Impurity Al (ppm) | Charging capacity (Ah) | Discharging capacity (Ah) | Energy efficiency (%) |
|---|---|---|---|---|---|---|---|
| Example 7 | 25:75 | 2 | 3.5 | 8.5 | 2.53 | 2.43 | 83.84 |
| Example 8 | 50:50 | 5 | 5.6 | 10.6 | 2.53 | 2.45 | 85.15 |
| Example 9 | 75:25 | 8 | 7.1 | 11.5 | 2.51 | 2.44 | 85.04 |
| Comparative Example 3 | 100:0 | 14 | 20.4 | 15.5 | 2.42 | 2.33 | 83.10 |

As shown in Table 3, according to the preparation method of the present invention, impurities in the electrolyte solution were reduced by up to 82.8 % for Si and up to 45.2 % for Al compared to the comparative example, and reaction time was reduced by up to 85.7 %. In addition, in Examples 7 to 9, it took less than 600 minutes to reduce the oxidation number of the vanadium compound to 3.5, and in Comparative Example 3, it took at least 840 minutes. Based on these results, the effect of reducing reaction time according to the preparation method of the present invention was confirmed.

In addition, as shown in Table 3, in the case of the electrolyte solution prepared by the process of the present invention, charging capacity was 2.51 Ah or more. In the case of the comparative example, charging capacity was 2.42 Ah, which was more than 0.09 Ah lower than the above case. In the case of the electrolyte solution prepared by the process of the present invention, discharging capacity was 2.43 Ah or more. In the case of Comparative Example 3, discharging capacity was 2.33 Ah, which was more than 0.10 Ah lower than the above case.

In addition, as shown in Table 3, in the case of the electrolyte solution prepared by the process of the present invention, energy efficiency was at least 83.84 %, which was at least 0.74 % higher than the comparative example (83.10 %). These results indicate that the quality and battery performance of the electrolyte solution prepared by the process of the present invention were improved.

In particular, in Examples 7 to 9, in the case of Example 7 in which the amount of the post-solvent was greater than the amount of the pre-solvent, compared to the case of Example 9 in which the amount of the pre-solvent was greater than the amount of the post-solvent, the effect of reducing reaction time and impurities was greatly improved.

In addition, it was confirmed that Example 8 is the best in terms of battery performance such as charging capacity, discharging capacity, and energy efficiency. This may be an example showing that even when the above-described pre-solvent amount is the theoretical minimum amount, battery performance is not necessarily the best.

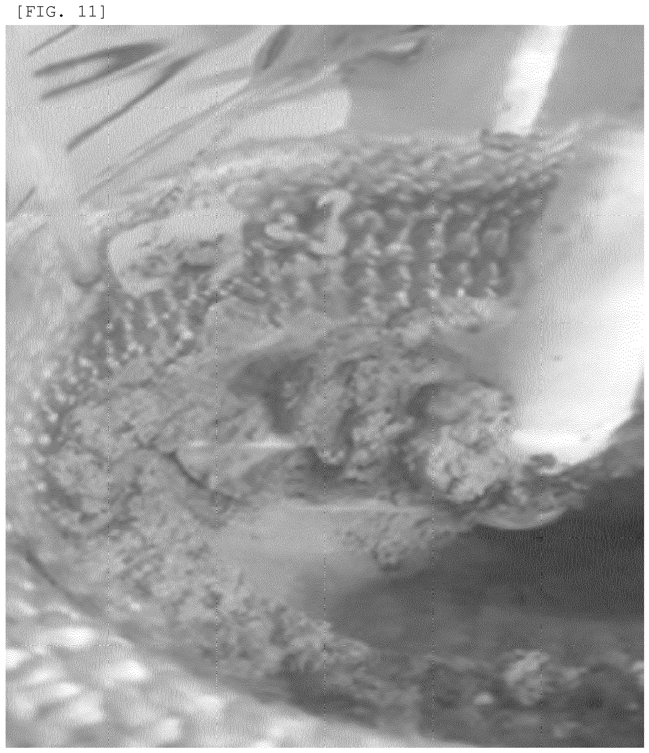

In addition, as shown in FIG. 11 below, in Comparative Example 4, it was confirmed that the electrolyte solution was not prepared. These results show that the process of the present invention may be effectively performed only when there is more than the minimum required mol number of water per mol number of vanadium described above.

## Example 3

The vanadium electrolyte solution of Example 3 includes 1.7 mol of a vanadium compound and 4.3 mol of sulfuric acid, and has an electrolyte solution density of 1.35 g/cm$^3$. The ionic value of the vanadium electrolyte solution is 3.5, and the vanadium electrolyte solution is an electrolyte solution containing tetravalent vanadium ions and vanadium trivalent ions in a ratio of 1:1.

Materials needed to prepare the electrolyte solution of Example 3 are as follows:

154.5 g of a vanadium compound having a purity of 99.5 %, 432 g of 98 % sulfuric acid, A g of deionized water (DIW) for a pre-solvent, (720-A) g of deionized water (DIW) for a post-solvent, and 40.4 g of an aqueous hydrazine monohydrate solution (80 % by weight) (Here, A refers to the description of Examples 10 to 13 and Comparative Examples 5 and 6 described later).

The configuration of the apparatus needed to prepare the electrolyte solution of Example 3 is as follows.

The apparatus consists of a reaction tank (hereinafter referred to as "reactor") capable of reacting 1 L or more of reactants, a stirrer, a heater having a temperature control function, a thermometer, reflux, and a filtration system (pump, tube, filter, etc.). In the apparatus, a surface in contact with the electrolyte solution must be made of a material having acid resistance and chemical resistance, such as glass, PTFE, PE, and Teflon.

The vanadium compound ($V_2O_5$), the pre-solvent, and hydrazine monohydrate ($N_2H_4 \cdot H_2O$) were fed into the reaction tank through a raw material inlet, and then sulfuric acid ($H_2O$) was fed thereto.

In the process of adding sulfuric acid, the first step reaction was performed while maintaining reaction temperature at 110 °C (first temperature) by heating the reactant using a jacket-type heat exchanger (heater) surrounding the reaction tank.

After the first step reaction was completed, cooling was performed, water vapor generated during the reduction reaction and water vapor in nitrogen gas ($N_2$) were recovered into the reactor, and nitrogen gas ($N_2$) was discharged to the outside.

Next, cooling was performed so that temperature was reduced to -25 to 20 °C and then the post-solvent was added (Example 1), or the post-solvent was added and then cooling was performed so that temperature was reduced to -25 to 20 °C (Example 2). While maintaining the cooling conditions, impurities were removed through a discharge pipe equipped with a filtration means, and the final electrolyte solution product ($V^{3.5+}$ electrolyte product) was obtained.

In addition, in the case of Comparative Example 1, cooling was performed so that temperature was reduced to 20 to 40 °C and then the post-solvent was added. Then, while maintaining the cooling conditions, filtration was performed. In the case of Comparative Example 2, the post-solvent was added, and then filtration was performed at 40 to 100 °C without cooling. Impurities were removed from the filtration through a discharge pipe equipped with a filtration means to obtain a final electrolyte solution product ($V^{3.5+}$ electrolyte product).

Specifically, in Example 10, Example 11, Comparative Example 5, and Comparative Example 6, the pre-solvent A was used in an amount of 540 g, which was about 75 % of the total solvent, and the amount of the post-solvent was 180 g. When each amount was converted to mol number, the pre-solvent was 30 M and the post-solvent was 10 M. Here, the pre-solvent is about 3.2 times excess compared to the minimum required 9.35 M water compared to 1.7 M vanadium, and is an amount corresponding to a mol number that is 17.6 times more than 1.7 M vanadium.

Since the electrolyte solution preparation steps in Example 10, Example 11, Comparative Example 5, and Comparative Example 6 are the same except for applying the above-described post-solvent addition order and cooling conditions, each step is described in detail below.

## <Example 10>

The first step reaction presented in the preparation example was performed.

## Adding vanadium compound and pre-solvent

First, deionized water (DIW) and the vanadium compound ($V_2O_5$) were fed into a reactor under operation of a stirrer. At this time, 440 g of 540 g of the pre-solvent was fed.

## Adding hydrazine compound

Next, 40.4 g of hydrazine monohydrate ($N_2H_4 \cdot H_2O$) was mixed with the remaining 100 g of the pre-solvent and then fed into the reactor. During the input process, the temperature inside the reactor may increase within 10 °C.

## Adding sulfuric acid

In the above-described step, sulfuric acid was added at a sulfuric acid input flow rate considering heat generation.

Specifically, sulfuric acid was added slowly and the flow rate was adjusted to prevent the reaction solution from splashing on the wall of the vessel as much as possible, and the heating temperature within the reactor was ensured not to exceed 110 °C.

Here, reflux expelled gas by-products ($N_2$) generated during reduction process of pentavalent vanadium ions out of the container, and condensed and cooled vaporized $H_2O$ and $H_2SO_4$ so that the $H_2O$ and $H_2SO_4$ remained in the reactor to maintain a high temperature of around 110 °C and prevent composition change inside the reactor.

### Reducing

Reduction was performed while maintaining the reactor temperature at 110 °C using a heater or a heat exchanger. The progress of reduction was confirmed by collecting a portion (0.5 ml or less) of the reactant, diluting the portion, and performing UV measurement.

Here, reflux expelled gas by-products ($N_2$) generated during reduction process of pentavalent vanadium ions out of the container, and condensed and cooled vaporized $H_2O$ and $H_2SO_4$ so that the $H_2O$ and $H_2SO_4$ remained in the reactor to maintain a high temperature of around 110 °C and prevent composition change inside the reactor.

### Cooling

When the reduction reaction was completed, the heater or heat exchanger was stopped, and cooling was performed to -25 to 20 °C using a cooler.

### Adding post-solvent

180 g of the post-solvent was added to the reactor and stirred with the cooled electrolyte solution described above. During this process, some heat was generated. At this time, the temperature was reduced to -25 to 20 °C through cooling.

### Filtrating

Then, impurities were removed again through a discharge pipe equipped with a filtration means, and a final electrolyte solution product ($V^{3.5+}$ electrolyte product) was obtained while maintaining the cooled temperature.

### <Example 11: Change of cooling and post-solvent addition steps>

In Example 11, the same process as in Example 10 was performed except that the orders of the cooling step and the post-solvent addition step of Example 10 were changed.

Specifically, when the reduction step in Example 10 was completed, 180 g of the post-solvent was added to the reactor and mixed with the electrolyte solution. During this process, some heat was generated. At this time, the temperature was reduced to -25 to 20 °C through cooling.

While maintaining the cooling temperature or maintaining the temperature at -25 to 20 °C, impurities were removed through a discharge pipe equipped with a filtration means to obtain a final electrolyte solution product ($V^{3.5+}$ electrolyte product) .

### <Comparative Example 5: Change in cooling conditions>

In Comparative Example 5, the same process as in Example 10 was performed except that the cooling conditions of Example 10 were changed.

Specifically, in Example 10, the temperature was reduced to -25 to 20 °C. On the other hand, in Comparative Example 5, the temperature was reduced to 20 to 40 °C, and then 180 g of the post-solvent was fed into the reactor and mixed with the electrolyte solution.

Then, while maintaining the cooling temperature (20 to 40 °C), impurities were removed through a discharge pipe equipped with a filtration means to obtain a final electrolyte solution product ($V^{3.5+}$ electrolyte product).

### <Comparative Example 6: Not using cooling step and change in filtration conditions>

In Comparative Example 6, the same process as in Example 10 was performed except that the cooling step was omitted, and the filtration conditions were changed.

Specifically, the step of reducing the temperature to -25 to 20 °C of Example 10 was omitted, and 180 g of the post-solvent was fed into the reactor and mixed with the electrolyte solution. Then, under the cooling conditions at 40 to 100 °C set by natural cooling, impurities were removed through a discharge pipe equipped with a filtration means to obtain a final electrolyte solution product ($V^{3.5+}$ electrolyte product).

**<Example 12: Change (1) in input amount of pre-solvent/post-solvent>**

In Example 12, the same process as in Example 10 was performed except that the input amount of the pre-solvent/post-solvent in Example 10 was changed.

Specifically, 360 g of the pre-solvent A of Example 10 and 360 g of the post-solvent were used. That is, an amount equivalent to about 50 % of the total solvent was used. This corresponds to a water content of about 2.1 times the minimum pre-solvent content and is an amount corresponding to 11.8 times 1.7 mol of vanadium.

**<Example 13: Change (2) in input amount of pre-solvent/post-solvent>**

In Example 13, the same process as in Example 10 was performed except that the input amount of the pre-solvent/post-solvent of Example 10 was changed.

Specifically, 180 g of the pre-solvent A of Example 10 and 540 g of the post-solvent were used. That is, of the total solvent, an amount equivalent to approximately 25 % was used as the pre-solvent and an amount equivalent to 75 % was used as the post-solvent. This corresponds to a water content of about 1.1 times the minimum pre-solvent content and is an amount corresponding to 5.9 times 1.7 mol of vanadium.

**<Comparative Example 7: No post-solvent used>**

To compare with the examples, in Comparative Example 7, the same process as in Example 10 was performed except that a total amount (720 g) of the pre-solvent and the post-solvent was added during the pre-solvent input step of Example 10, and the pre-solvent and the post-solvent were not added in the post-solvent input step. In Table 4, the amounts of the pre-solvent/post-solvent used in Examples 10 to 13 and Comparative Example 7 are shown.

**<Comparative Example 8: Change (3) in input amount of pre-solvent/post-solvent>**

In Comparative Example 8, the same process as in Example 10 was performed except than the input amount of the pre-solvent/post-solvent was changed. Specifically, Comparative Example 2 is an experiment using 95 g (3.1 times mol compared to 1.7 mol of vanadium) of the pre-solvent described in the present invention.

**<Example 14: Circulation filtration, low temperature cooling, and post-solvent addition>**

The circulation filtration (filtering) process is a process that filters the electrolyte solution in the reactor using a circulation system to filter out impurities. The circulation filtration process may be performed immediately after sulfuric acid is added in Step 2. In addition, the circulation filtration process may be performed between 'the point at which the amount corresponding to vanadium mol is added' and 'the point at which approximately 2 hours have passed since all sulfuric acid has been introduced'. A filter used in the circulation filtration process may be hydrophilic, hydrophobic, or amphiphilic. The material of the filter may include one or more selected from the group consisting of acid resistant PTFE, PE, PET, and PP, and the pore size of the filter may be 0.2 to 5 pm. Here, the time required for filtration may be determined by the size of the filter, that is, diameter and pore size.

That is, in Example 14, the same process as in Example 10 was performed except that the filtration was performed using the circulation filtration method using the device shown in FIG. 16 equipped with circulation filtration pipes.

Specifically, the apparatus configuration and process flowchart for preparing the electrolyte solution of Example 14 are as shown in FIG. 16 below. Referring to FIG. 16, hydrazine monohydrate ($N_2H_4 \cdot H_2O$), a vanadium compound ($V_2O_5$), sulfuric acid ($H_2SO_4$), and deionized water (DIW) were fed into a single reaction tank through a raw material inlet, and a first reduction reaction was performed while stirring the fed reaction raw materials using a stirrer. After the first reduction reaction was completed, the reactant was cooled to -25 to 20 °C, and then 180 of a post-solvent was fed into the reactor and mixed with an electrolyte solution. During this process, some heat was generated. At this time, the temperature was reduced to -25 to 20 °C through cooling.

While maintaining the cooling temperature or additional cooling was performed so that the temperature was reduced to -25 to 20 °C, impurities were removed by passing the reactant through a circulation pipe equipped with a filtration means. Then, the reactant was heated using a jacket-type heat exchanger (heater) surrounding the reaction tank to perform a second reduction reaction. Water vapor generated during the reduction reaction and water vapor in nitrogen gas ($N_2$) were cooled using an open reflux condenser and recovered in the reactor, and the nitrogen gas ($N_2$) was discharged to the outside through the open reflux condenser. When the second reduction reaction was completed, impurities were removed again through a discharge pipe equipped with a filtration means to obtain a final electrolyte solution product ($V^{3.5+}$ electrolyte product).

**<Comparative Example 9: Circulation filtration, cooling at room temperature, and post-solvent addition>**

The circulation filtration (filtering) process is a process that filters the electrolyte solution in the reactor using a circulation system to filter out impurities. The circulation filtration process may be performed immediately after sulfuric acid is added in Step 2. In addition, the circulation filtration process may be performed between 'the point at which the amount corresponding to vanadium mol is added' and 'the point at which approximately 2 hours have passed since all sulfuric acid has been introduced'. A filter used in the circulation filtration process may be hydrophilic, hydrophobic, or amphiphilic. The material of the filter may include one or more selected from the group consisting of acid resistant PTFE, PE, PET, and PP, and the pore size of the filter may be 0.2 to 5 pm. Here, the time required for filtration may be determined by the size of the filter, that is, diameter and pore size.

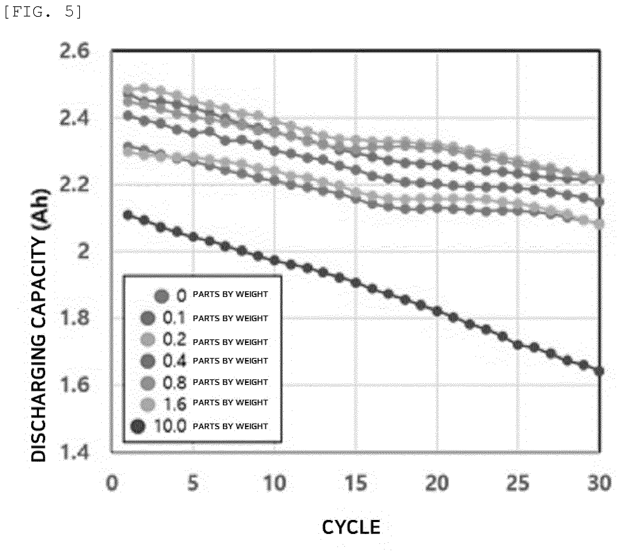

That is, in Comparative Example 9, the same process as in Comparative Example 5 was performed except that the filtration was performed using the circulation filtration method using the device shown in FIG. 5 equipped with circulation filtration pipes.

Specifically, the apparatus configuration and process flowchart for preparing the electrolyte solution of Comparative Example 9 are as shown in FIG. 16 below. Referring to FIG. 16, hydrazine monohydrate ($N_2H_4·H_2O$), a vanadium compound ($V_2O_5$), sulfuric acid ($H_2SO_4$), and deionized water (DIW) were fed into a single reaction tank through a raw material inlet, and a first reduction reaction was performed while stirring the fed reaction raw materials using a stirrer. When the first reduction reaction was completed, the reactant was cooled to 20 to 40 °C, and 180 g of the post-solvent was fed into the reactor and mixed with an electrolyte solution.

While maintaining the cooling temperature at 20 to 40 °C, impurities were removed by passing the reactant through a circulation pipe equipped with a filtration means. Then, the reactant was heated using a jacket-type heat exchanger (heater) surrounding the reaction tank to perform a second reduction reaction. Water vapor generated during the reduction reaction and water vapor in nitrogen gas ($N_2$) were cooled using an open reflux condenser and recovered in the reactor, and the nitrogen gas ($N_2$) was discharged to the outside through the open reflux condenser. When the second reduction reaction was completed, impurities were removed again through a discharge pipe equipped with a filtration means to obtain a final electrolyte solution product ($V^{3.5+}$ electrolyte product).

**<Comparative Example 10: Circulation filtration, low temperature cooling, and no post-solvent added>**

In Comparative Example 10, the same process as in Example 14 was performed except that no post-solvent was added.

Specifically, the apparatus configuration and process flowchart for preparing the electrolyte solution of Comparative Example 10 are as shown in FIG. 16 below. Referring to FIG. 16, hydrazine monohydrate ($N_2H_4·H_2O$), a vanadium compound ($V_2O_5$), sulfuric acid ($H_2SO_4$), and deionized water (DIW) were fed into a single reaction tank through a raw material inlet, and a first reduction reaction was performed while stirring the fed reaction raw materials using a stirrer. When the first reduction reaction was completed, the reactant was cooled to -25 to 20 °C, and impurities were removed by passing the reactant through a circulation pipe equipped with a filtration means without addition of the post-solvent. Then, the reactant was heated using a jacket-type heat exchanger (heater) surrounding the reaction tank to perform a second reduction reaction. Water vapor generated during the reduction reaction and water vapor in nitrogen gas ($N_2$) were cooled using an open reflux condenser and recovered in the reactor, and the nitrogen gas ($N_2$) was discharged to the outside through the open reflux condenser. When the second reduction reaction was completed, impurities were removed again through a discharge pipe equipped with a filtration means to obtain a final electrolyte solution product ($V^{3.5+}$ electrolyte product).

**<Test Example 4>**

The performance of the electrolyte solutions and secondary batteries prepared in Examples 10 to 14 and Comparative Examples 5 to 10 was evaluated by the following methods.

[Measurement of oxidation number]

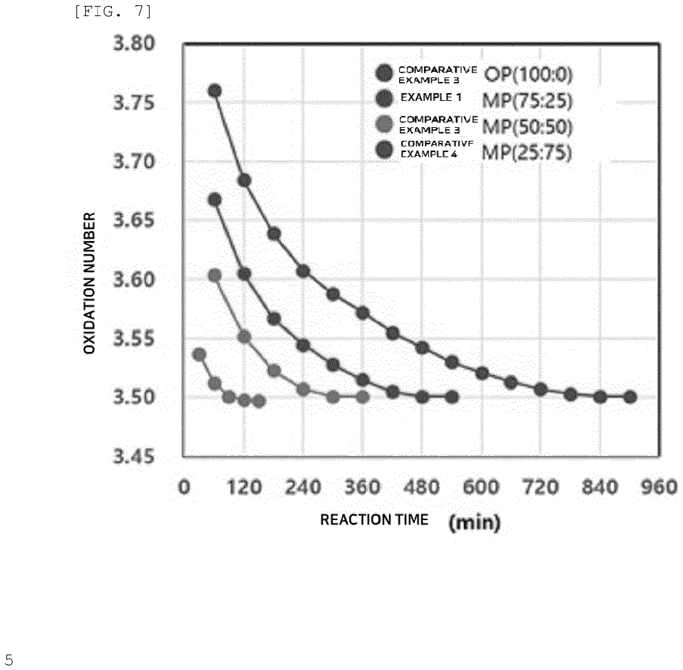

The oxidation number of vanadium was measured at each reaction stage in the electrolyte solution preparation process using a UV spectrometer, and reaction time is shown in Table 4 and FIG. 7 below.

[Measurement of impurities]

The contents of impurities (Si and Al) in the electrolyte solution were measured using an ICP-OES device, and the results are shown in Table 4 below.

[Evaluation of battery capacity (Ah) and energy efficiency (%)]

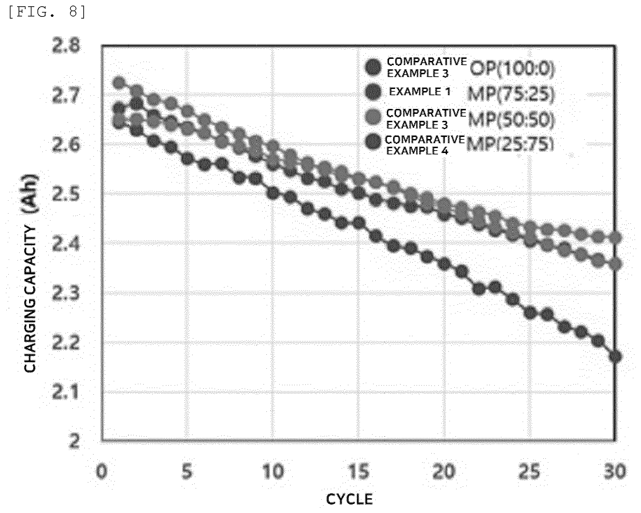

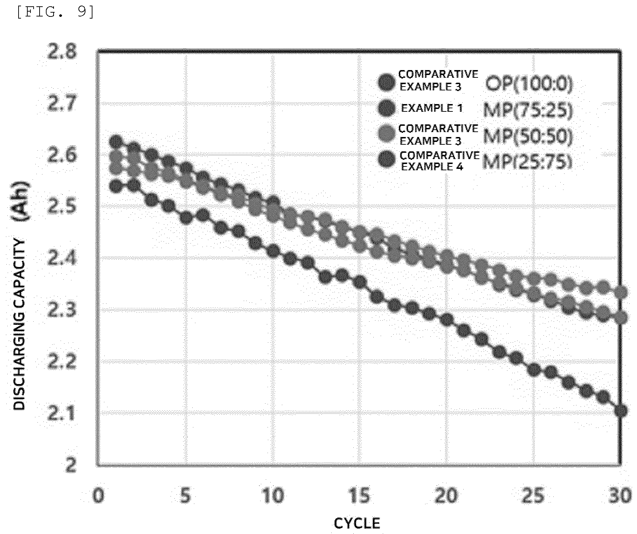

The secondary battery was charged with a constant current of 100 mA/cm$^2$ at room temperature until the voltage reached 1.60 V, and then discharged with a reverse constant current of 100 mA/cm$^2$ until the voltage reached 0.8 V. The above cycle was repeated 30 times, the average value was calculated, and the results are shown in Table 4 and FIGS. 8 to 10 below.

[Table 4]

| Classification | Solvent ratio (Before:After) | Reaction time (hr) | Impurity Si (ppm) | Impurity Al (ppm) | Charging capacity (Ah) | Discharging capacity (Ah) | Energy efficiency (%) |
|---|---|---|---|---|---|---|---|
| Example 10 | 25:75 | 2 | 3.5 | 8.5 | 2.53 | 2.43 | 83.84 |
| Example 12 | 50:50 | 5 | 5.6 | 10.6 | 2.53 | 2.45 | 85.15 |
| Example 13 | 75:25 | 8 | 7.1 | 11.5 | 2.51 | 2.44 | 85.04 |
| Comparative Example 7 | 100:0 | 14 | 20.4 | 15.5 | 2.42 | 2.33 | 83.10 |

As shown in Table 4, according to the preparation method of the present invention, compared to the comparative examples, the content of impurities in the electrolyte solution was reduced. Specifically, Si was reduced by up to 82.8 %, and Al was reduced by up to 45.2 % or more. Reaction time was reduced by up to 85.7%. In addition, as shown in FIG. 8 below, in Examples 10, 12, and 13, it took less than 600 minutes to reduce the oxidation number of the vanadium compound to 3.5. On the other hand, in Comparative Example 3, it took at least 840 minutes to reduce the oxidation number of the vanadium compound to 3.5. Based on these results, the effect of reducing the reaction time according to the preparation method of the present invention was confirmed.

In addition, as shown in Table 4 and FIGS. 8 to 9 below, in the case of the electrolyte solution prepared by the process of the present invention, the charging capacity was 2.51 Ah or more. On the other hand, in the case of the comparative example, the charging capacity was 2.42 Ah, which was at least 0.09 Ah lower than the above case. In the case of the electrolyte solution prepared by the process of the present invention, the discharging capacity was 2.43 Ah or more. On the other hand, in the case of Comparative Example 5, the discharging capacity was 2.33 Ah, which was at least 0.10 Ah lower than the above case.

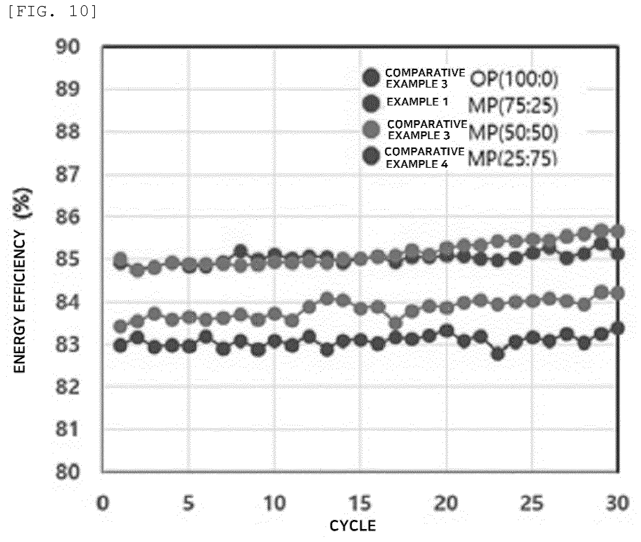

In addition, as shown in Table 4 and FIG. 10 below, in the case of the electrolyte solution prepared by the process of the present invention, energy efficiency was at least 83.84 %, which was at least 0.74 % higher than the comparative example (83.10 %). These results indicate that the quality and battery performance of the electrolyte solution prepared by the process of the present invention were improved.

In particular, in Examples 10, 12, and 13, in the case of Example 10 in which the amount of the post-solvent was greater than the amount of the pre-solvent, compared to the case of Example 13 in which the amount of the pre-solvent was greater than the amount of the post-solvent, the effect of reducing reaction time and impurities was greatly improved.

In addition, it was confirmed that Example 12 is the best in terms of battery performance such as charging capacity, discharging capacity, and energy efficiency. This may be an example showing that even when the above-described pre-solvent amount is the theoretical minimum amount, battery performance is not necessarily the best.

**<Test Example 5>**

The content of impurities in each of the electrolyte solutions prepared in Examples 10 to 14 and Comparative Examples 5 to 10 was measured using an ICP device, and the results are shown in Table 5 below.

[Table 5]

| Classification | Impurity Al (ppm) | Impurity Ca (ppm) | Impurity Fe (ppm) | Impurity Si (ppm) |
|---|---|---|---|---|
| Example 10 | 2.3 | 7.4 | 6.2 | 2.4 |
| Example 11 | 2.2 | 7.3 | 7.3 | 1.8 |
| Example 14 | 2.1 | 7.4 | 2.5 | 2.2 |
| Comparative Example 5 | 4.5 | 9.9 | 8.8 | 4.1 |

(continued)

| Classification | Impurity Al (ppm) | Impurity Ca (ppm) | Impurity Fe (ppm) | Impurity Si (ppm) |
|---|---|---|---|---|
| Comparative Example 6 | 4.8 | 9.5 | 8.7 | 4.3 |
| Comparative Example 8 | 16.7 | 9.1 | 8.5 | 16.5 |
| Comparative Example 9 | 4.6 | 8.2 | 3.3 | 4.0 |
| Comparative Example 10 | 9.3 | 9.3 | 5.6 | 6.1 |

As shown in Table 5, according to the preparation method of the present invention, compared to the comparative examples, the content of impurities in the electrolyte solution was reduced. Specifically, Al was reduced by up to 87.4 %, Ca was reduced by up to 26.2 %, Fe was reduced by up to 71.2 %, and Si was reduced by up to 89.0 %. First, as shown in Examples 10 and 11, in which only the order of the cooling step and the post-solvent addition step was changed, in Example 10, in which the cooling step was performed first, Fe was further purified. On the other hand, in Example 11, in which the post-solvent addition step was performed first, Si was further purified.

In addition, when comparing Example 10 in which cooling was performed at low temperature, Comparative Example 5 in which cooling was performed at room temperature, and Comparative Example 6 in which cooling was performed at high temperature, the case of low temperature cooling showed good effect on four types of impurities: Al, Ca, Fe, and Si.

In addition, as shown in Comparative Example 7, when post-solvent input was not applied, it was difficult to obtain the effect of reducing impurities.

In addition, in the case of Example 14, in which the cooling step was performed first and then circular filtration was performed, it was confirmed that the impurities of Fe were significantly reduced, showing good effects for the four impurities of Al, Ca, Fe, and Si.

In particular, when comparing Example 14 in which the post-solvent was added while performing cooling at low temperature and then circulation filtration was performed, Comparative Example 9 in which circulation filtration was performed while performing cooling at room temperature, and Comparative Example 10 in which circulation filtration was performed without addition of the post-solvent while performing cooling at low temperature, when the post-solvent was added while performing cooling at low temperature and then circulation filtration was performed, removal of four impurities including Al, Ca, Fe, and Si was maximized.

Therefore, when comprehensively considering the results of the examples of the present invention and the comparative examples, when the process of the present invention is used, reaction time may be greatly reduced, the effect of removing impurities may be excellent, and the performance of a secondary battery containing the electrolyte solution prepared by the process of the present invention may be excellent. Accordingly, due to reduction in reaction time and impurities, high quality and high performance may be provided. Therefore, the present invention may be applied to all fields where vanadium redox flow batteries are used, such as renewable energy, smart grid, and power plants.

**Claims**

1. A method of preparing a vanadium electrolyte solution, comprising:

   a first step of adding a pentavalent vanadium compound and water and then sequentially adding a nitrogen-based reducing agent and an acid to reduce the pentavalent vanadium compound to a tetravalent vanadium compound; and
   a second step of reducing the tetravalent vanadium compound to a 3.3- to 3.7-valent vanadium compound,
   wherein reaction rates of one or more reduction reactions selected from the reduction reaction of the first step and the reduction reaction of the second step are reduced.

2. The method according to claim 1, wherein the reaction rate of the reduction reaction is reduced by using a redox additive having lower reducing power than reducing power of the nitrogen-based reducing agent.

3. The method according to claim 2, wherein a dehydration reaction occurs between the redox additive and the acid to generate an aqueous solution, and then the redox additive is reduced to oxidize the nitrogen-based reducing agent to generate nitrogen gas.

4. The method according to claim 3, wherein the redox additive comprises one or more selected from molybdenum metal, molybdenum oxide (MoxOy), molybdenum nitride (MoxNy), molybdenum chloride (MoxCly), molybdenum sulfide (MoxSy), molybdenum phosphide (MoxPy), molybdenum carbonate (MoxCy), molybdenum metal oxide (MoxMyOz), molybdenum metal nitride (MoxMyNz), molybdenum metal chloride (MoxMyClz), molybdenum metal sulfide (MoxMySz), molybdenum metal phosphide (MoxMyPz), and molybdenum metal carbonate (MoxMyCz).

5. The method according to claim 4, wherein a metal of the redox additive is an element selected from Al, As, Ba, Ca, Cd, Co, Cr, Cu, Fe, Ga, K, Mg, Mn, Na, Ni, Pb, Si, Sn, Ti, Zn, Au, Ag, Pt, Ru, Pd, Li, Ir, W, Nb, Zr, Ta, Ge, and In or an alloy of a plurality of elements selected from Al, As, Ba, Ca, Cd, Co, Cr, Cu, Fe, Ga, K, Mg, Mn, Na, Ni, Pb, Si, Sn, Ti, Zn, Au, Ag, Pt, Ru, Pd, Li, Ir, W, Nb, Zr, Ta, Ge, and In, and x, y(x/y) or x,y, and z(x/y/z) are independently an integer of 0 or 1.

6. The method according to claim 5, wherein, based on 100 parts by weight of the pentavalent vanadium compound, the redox additive is comprised in an amount of 0.1 to 1.6 parts by weight.

7. The method according to claim 1, wherein, based on 100 parts by weight of the vanadium compound, the nitrogen-based reducing agent is comprised in an amount of 10 to 35 parts by weight.

8. The method according to claim 1, wherein a molar concentration (M; mol/L) ratio of the pentavalent vanadium compound to the nitrogen-based reducing agent is 1:0.1 to 1.6.

9. The method according to claim 1, wherein the acid comprises one or more selected from sulfuric acid, hydrochloric acid, nitric acid, and acetic acid, and a proton ion concentration of the acid is 1 to 20 mol per 1 mol of the vanadium compound.

10. The method according to claim 1, wherein the second step is performed at 70 to 120 °C.

11. The method according to claim 1, wherein the pentavalent vanadium compound is a low-quality compound having a purity of 90 % or more and less than 99.9 % or a high-quality compound having a purity of 99.9 % or more.

12. The method according to claim 1, comprising performing filtration after the first step or the second step.

13. The method according to claim 1 or 2, wherein, in the first step, water is used in an amount of 5 to 15 mol per 1 mol of the vanadium compound, and
the vanadium compound obtained in the second step is cooled to a temperature below room temperature, water is added in a larger amount than the amount of water previously added, and then a reaction solution is filtered to reduce a reaction rate of the reduction reaction.

14. The method according to claim 13, wherein the water added in excess amount is within a range of 42 to 44 mol based on a composition of 1.6 mol of vanadium and 4.0 mol of sulfuric acid.

15. The method according to claim 13, wherein, in the first step, water is used in an amount of 5 to 15 mol per 1 mol of the vanadium compound, and
a reaction is performed at a temperature above 100 °C to obtain a vanadium compound, water is added in a larger amount than the amount of water previously added, the reduced vanadium compound is cooled to -25 to 20 °C, and a reaction solution is subject to circulation filtration at - 25 to 40 °C to reduce a reaction rate of the reduction reaction.

16. The method according to claim 13, wherein, in the first step, water is used in an amount of 5 to 15 mol per 1 mol of the vanadium compound, and
a reaction is performed at a temperature above 100 °C to obtain a vanadium compound, the reduced vanadium compound is cooled to -25 to 20 °C, water is added in a larger amount than the amount of water previously added, and a reaction solution is subject to circulation filtration at -25 to 40 °C to reduce a reaction rate of the reduction reaction.

17. A method of preparing a vanadium electrolyte solution, comprising:

step (A) of preparing a reaction mixture by adding a pentavalent vanadium compound to a solvent and then adding a nitrogen-based reducing agent thereto;
step (B) of reducing the pentavalent vanadium compound to a tetravalent vanadium compound while performing a dehydration reaction by adding an acid and a redox additive to the reaction mixture;

step (C) in which the dehydration reactant oxidizes the nitrogen-based reducing agent to generate nitrogen gas and a self-reduced product; and

step (D) in which the self-reduced product is oxidized by heating the reactant and the tetravalent vanadium compound is reduced to a 3.3- to 3.7-valent vanadium compound,

wherein an entire amount of the nitrogen-based reducing agent is added in step (A), or the nitrogen-based reducing agent is added in steps (A) and (D) in a split manner.

18. The method according to claim 17, wherein the redox additive participates in a reaction in an aqueous solution state through dehydration reaction with an acid, so by-products derived from the redox additive are not generated.

19. The method according to claim 17, wherein step (D) is performed by applying reduction reaction time of a vanadium compound calculated by substituting a reaction temperature of 70 to 120 °C and an input amount of a redox additive into Equation 1 below.

[Equation 1]

$$t_R = A\ln(Ma/Mv) + B,$$

wherein $t_R$ is reaction time (min), A is a rate constant, B is a concentration constant, Ma is an input amount (g) of a redox additive, and Mv is an input amount (g) of a vanadium compound.

20. A method of preparing a vanadium electrolyte solution, comprising:

a first step of obtaining a reduced vanadium compound by reacting a vanadium compound, a reducing agent, and an acid at 100 °C or higher in 5 to 15 mol of a pre-solvent per 1 mol of the vanadium compound;

a second step of cooling the reduced vanadium compound to -25 to 20 °C after the reaction is complete; and

a third step of performing circulation filtration of the cooled vanadium electrolyte solution at -25 to 40 °C.

21. A vanadium electrolyte solution prepared using the method according to any one of claims 1 to 20.

22. A redox flow battery comprising the vanadium electrolyte solution according to claim 21.

23. The redox flow battery according to claim 22, wherein the vanadium electrolyte solution is comprised in positive and negative electrodes.

[FIG. 1]

[FIG. 2]

[FIG. 3]

[FIG. 4]

[FIG. 5]

[FIG. 6]

[FIG. 7]

[FIG. 8]

[FIG. 9]

[FIG. 10]

[FIG. 11]

[FIG. 12]

**EP 4 322 268 A1**

## INTERNATIONAL SEARCH REPORT

| | International application No. |
|---|---|
| | **PCT/KR2021/017147** |

**A.    CLASSIFICATION OF SUBJECT MATTER**

**H01M 8/18**(2006.01)i; **C01G 31/00**(2006.01)i

According to International Patent Classification (IPC) or to both national classification and IPC

**B.    FIELDS SEARCHED**

Minimum documentation searched (classification system followed by classification symbols)

H01M 8/18(2006.01); C01G 31/00(2006.01); H01M 12/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 바나듐 화합물(vanadium compound), 하이드라진(hydrazine), 레독스 플로우 전지(redox flow battery), 전해액(electrolyte), 산화몰리브데넘(molybdenum oxide)

**C.    DOCUMENTS CONSIDERED TO BE RELEVANT**

| Category* | Citation of document, with indication, where appropriate, of the relevant passages | Relevant to claim No. |
|---|---|---|
| X | KR 10-2020-0119773 A (KOREA ADVANCED INSTITUTE OF SCIENCE AND TECHNOLOGY) 20 October 2020 (2020-10-20) See paragraphs [0005], [0017], [0022], [0029]-[0038], [0043]-[0052], [0081] and [0082]. | 1,7-12,21-23 |
| Y | | 2 |
| A | | 3-6,13-20 |
| X | JP 2001-052731 A (NIPPON CHEM IND. CO., LTD.) 23 February 2001 (2001-02-23) See paragraphs [0008]-[0010] and [0013]. | 20 |
| Y | | 2 |
| A | REYNARD, Danick et al. Hydrogen production on demand by redox-mediated electrocatalysis: A kinetic study. Chemical Engineering Journal. 2021 (online publication date: 20 August 2020), vol. 407, Article no. 126721. See entire document. | 1-23 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **04 March 2022** | **04 March 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| International application No. |
|---|
| **PCT/KR2021/017147** |

### C. DOCUMENTS CONSIDERED TO BE RELEVANT

| Category* | Citation of document, with indication, where appropriate, of the relevant passages | Relevant to claim No. |
|---|---|---|
| A | JP 2016-162529 A (SHOWA DENKO KK) 05 September 2016 (2016-09-05)<br>　　See entire document. | 1-23 |
| A | CAO, Liuyue et al. Modification based on MoO3 as electrocatalysts for high power density vanadium redox flow batteries. ChemElectroChem. 27 April 2017, vol. 4, no. 8, pp. 1836-1839.<br>　　See entire document. | 1-23 |
| PX | HWANG, Deokhyun et al. Molybdenum-assisted reduction of VO2+ for low cost electrolytes of vanadium redox flow batteries. Research Square. 16 April 2021. Retrieved from <DOI: 10.21203/rs.3.rs-402509/v1>.<br>　　See entire document. | 1-23 |

Form PCT/ISA/210 (second sheet) (July 2019)

## INTERNATIONAL SEARCH REPORT
### Information on patent family members

International application No.

**PCT/KR2021/017147**

| Patent document cited in search report | | | Publication date (day/month/year) | Patent family member(s) | | | Publication date (day/month/year) |
|---|---|---|---|---|---|---|---|
| KR | 10-2020-0119773 | A | 20 October 2020 | EP | 3761440 | A1 | 06 January 2021 |
| | | | | KR | 10-2019-0102532 | A | 04 September 2019 |
| | | | | KR | 10-2238667 | B1 | 12 April 2021 |
| | | | | US | 2020-0411894 | A1 | 31 December 2020 |
| | | | | WO | 2019-164356 | A1 | 29 August 2019 |
| JP | 2001-052731 | A | 23 February 2001 | None | | | |
| JP | 2016-162529 | A | 05 September 2016 | JP | 6621584 | B2 | 18 December 2019 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1415538 B1
- JP 2002175831 A